# EUROPEAN PATENT SPECIFICATION

(11) **EP 2 360 758 B1**
(45) Date of publication and mention of the grant of the patent: **26.02.2014**
(21) Application number: 11153267.7
(22) Date of filing: 06.04.2007
(51) Int. Cl.: H01M 10/0562, H01M 10/0565, H01M 4/58, H01M 10/0525, H01M 4/13, H01M 10/058, H01M 10/0567

(54) **LITHIUM RECHARGEABLE ELECTROCHEMICAL CELL**
WIEDERAUFLADBARE ELEKTROCHEMISCHE LITHIUMZELLE
CELLULE ÉLECTROCHIMIQUE RECHARGEABLE AU LITHIUM

(30) Priority: 07.04.2006 EP 06112361; 18.10.2006 WO PCT/IB2006/053832; 18.10.2006 WO PCT/IB2006/053833
(43) Date of publication of application: 24.08.2011
(62) Divisional of application: 07735415.7
(73) Proprietor: Dow Global Technologies LLC, Midland, MI 48674 (US)
(72) Inventor: Exnar, Ivan, 4452 Itingen (CH); Wang, Qing, Singapore, 128041 (SG); Grätzel, Michael, 1025 St-sulpice (CH); Zakeeruddin, Shaik Mohammed, 1030 Bussigny (CH); Kavan, Ladislav, Prague (CZ)
(74) Representative: Raynor, John

(56) References cited:
- EP-A- 0 746 050
- WO-A-2006/131873
- US-A- 4 857 423
- US-A- 4 869 977
- US-A- 5 536 599
- BUHRMESTER ET AL: "Phenothiazine Molecules", JOURNAL OF THE ELECTROCHEMICAL SOCIETY, vol. 153, no. 2, 23 December 2005 (2005-12-23), pages A288-A294, XP002396171,

## Description

### FIELD OF THE INVENTION

This invention concerns electrochemically addressable lithium insertion electrode systems for electrochemical cells using non-aqueous organic electrolytes, quasi-solid gel electrolytes, solid electrolytes, or the like and in particular the use of said electrolytes in combination with porous electrode materials, i.e. doped or non-doped nanoparticles or sub-microparticles of lithium insertion materials and redox active compounds in the electrolyte. This invention also concerns the configuration of the electrochemical cell containing the redox active compounds.

### STATE OF THE ART

Electrochemical cells have used lithium insertion materials by adding conductive additive, i.e. carbon black, carbon fiber, graphite, or mixture of them to improve the electronic conductivity of the electrode films.

The lithium insertion materials in commercial electrochemical cells comprise 2~25 wt. %, typically 10 wt. % conductive additives. These conductive agents do not participate in the redox reactions and therefore represent inert mass reducing the specific energy storage capacity of the electrode. This situation is especially severe as the lithium insertion material or its de-intercalated state has very poor electronic conductivity.

For instance, pioneering work by Padhi et al (J. Electrochem. Soc. 144, 1188 (1997).) first demonstrated reversible extraction of Li from the olivine-structured LiFePO₄, however 25 wt.% acetylene black was added. This is also illustrated in JP 2000-294238 A2 wherein a LiFePO₄/Acetylene Black ratio of 70 /25 is used.

US Pat. No.6235182 and WO Pt. No. 9219092 disclose a method for coating insulators with carbon particles by substrate-induced coagulation. This method involves the adsorption of polyelectrolyte compound and subsequent coagulation of carbon particle on the substrate to form an adhesive carbon coating. For high quality carbon coating, the size of carbon particle is very dependent on the dimension of substrate and the amount of carbon used is still remarkable.

International patent application WO 2004/001881 discloses a new route for the synthesis of carbon-coated powders having the olivine or NASICON structure by mixing the precursors of carbon and said materials and subsequent calcinations. Nevertheless, it is still necessary to have 4~8 wt. % of coated carbon to exploit the invention fully.

US 4,857,423 teaches the use of redox reagents, dissolved in non-aqueous electrolytes, to provide over-charge protection for cells having alkali metal negative electrodes (anodes). In particular US 4,857,423 features the use of organometallic compounds, known as metallocenes, as redox shuttle reagents to provide over-charge protection.

### SUMMARY OF THE INVENTION

It has been discovered that the presence of some redox active compounds in the electrolyte forms an electrochemically addressable electrode system. For a cathodic lithium insertion material and a p-type redox active compound (S) dissolved in the electrolyte of cathodic compartment, upon positive polarization the p-type redox active compound will be oxidized at current corrector and charges (holes) will be transported from the current collector to the lithium insertion material by the diffusion of the oxidized p-type redox active compound (S+). As the redox potential of the p-type redox active compound is higher or matches closely the Fermi level of the lithium insertion material, S+ will be reduced by the lithium insertion material. Electrons and lithium ions will be withdrawn from it during battery charging. By contrast, during the discharging process, the oxidized species are reduced at current collector and charges (electrons) are transported from the current collector to the lithium insertion material by the diffusion of p-type redox active compound (S). Lithium ions and electrons are injected into the solid, as the redox potential of the p-type redox active compound is lower or matches closely the Fermi level of the lithium insertion material.

The cell is composed of two compartments, where the cathodic compartment comprises a cathodic lithium insertion material and p-type redox active compound(s) in the electrolyte; the anodic compartment comprises an anodic lithium insertion material and n-type redox active compound(s) in the electrolyte. These two compartments are separated by a separator and the redox active compounds are confined only in each compartment. Compared to the whole electrode system, the redox active compounds do not occupy any extra volume of the whole electrode system. Hence with respect to prior art, the present invention allows reducing greatly the volume of the conductive additives resulting in a much improved energy storage density.

It is therefore an object of the invention to provide a means to avoid or minimize the amount of the conductive additives required for the operation of an ion insertion battery. It is also an object of the invention to provide a rechargeable electrochemical cell having higher energy density.

The invention relates therefore to a rechargeable electrochemical cell as defined in the claims.

### DEFINITIONS

As used herein, the term "lithium insertion material" refers to the material which can host and release lithium ions reversibly. If the materials lose electrons upon charging, they are referred to as "cathodic lithium insertion material". If the materials acquire electrons upon charging, they are referred to as "anodic lithium insertion material".

As used herein, the term "p-type redox active compound" refers to those compounds that present in the electrolyte of cathodic compartment of the cell, and act as molecular shuttles transporting charges between current collector and cathodic lithium insertion material upon charging/discharging. On the other hand, the term "n-type redox active compound" refers to the molecules that present in the electrolyte of anodic compartment of the cell, and act as molecular shuttles transporting charges between current collector and anodic lithium insertion material upon charging/discharging.

### DETAILED DESCRIPTION OF THE INVENTION

The invention will be better understood below with a detailed description including different embodiments.

This is illustrated by the following figures :

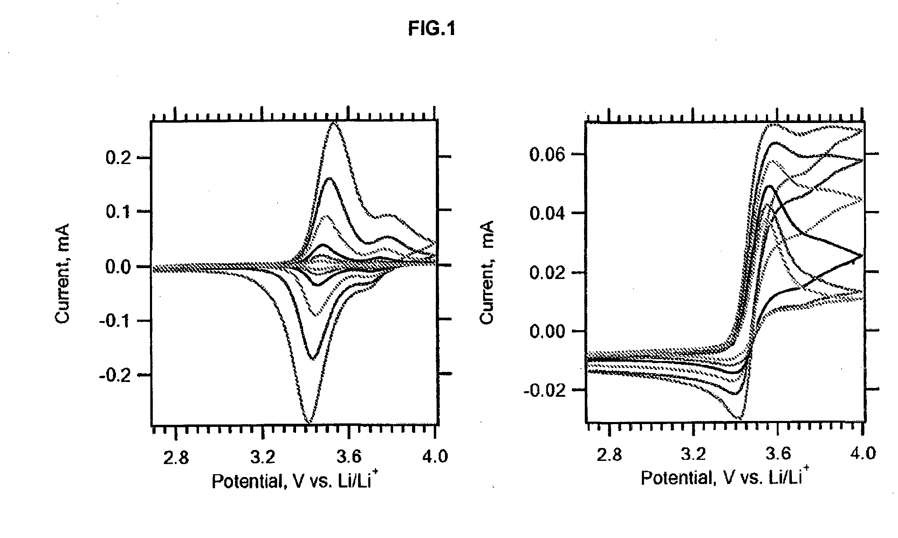

**FIG.1** Cyclic voltammograms (scan rates 20,10,5,2, 1 and 0.5 mV/s); electrolyte solution 1 M LiPF₆ in EC/DMC. Left chart: pure PVP-POA(1/6) film (0.14 mg/cm²). Right chart electrode from LiFePO₄/PVP-POA(1/6) composite film (0.98 mg/cm²).

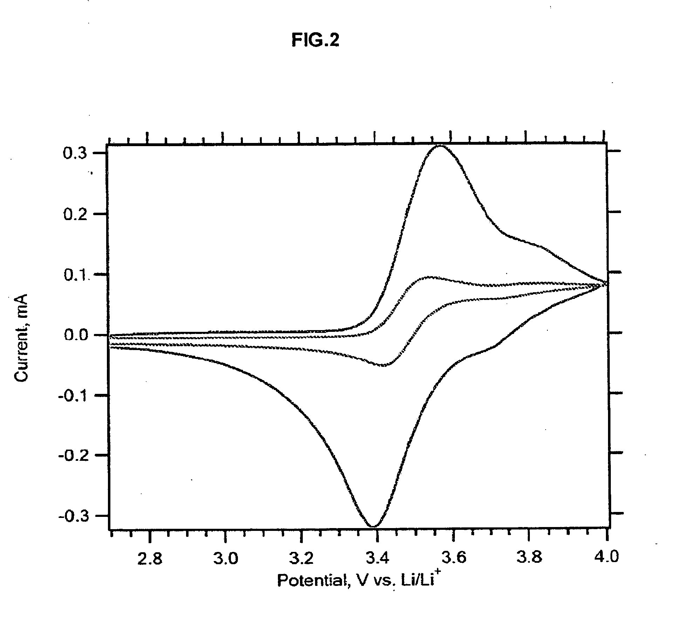

**FIG.2** Cyclic voltammograms (scan rate 50 mV/s); electrolyte solution 1 M LiPF₆ in EC/DMC. Red curve depicts the voltammogram of LiFePO₄/PVP-POA(1/6) composite film (0.98 mg/cm²). The current is normalized against the total mass of the active electrode materials, i.e. LiFePO₄/PVP-POA(1/6) composite film. Blue curve is for the pure polymer PVP-POA(1/6). In this case, the current is normalized against the mass of pure polymer in the composite.

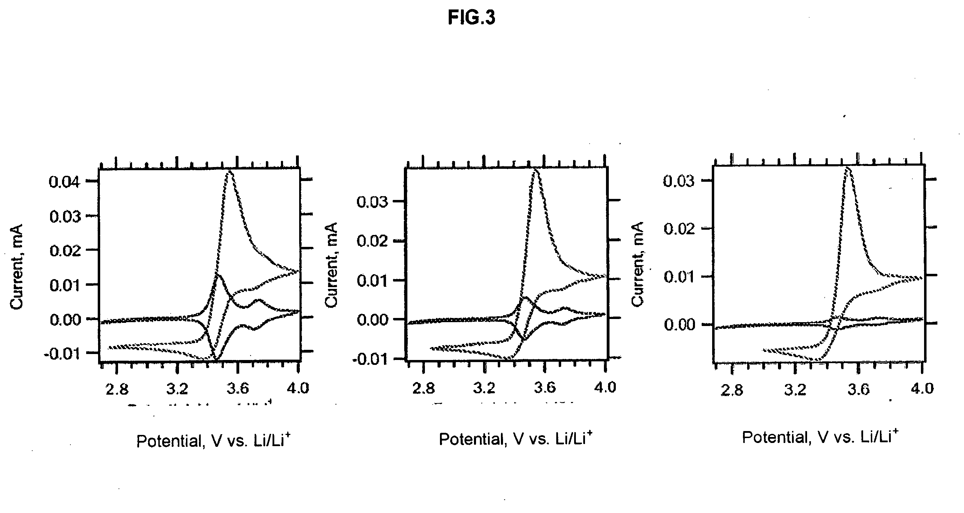

**FIG.3** Cyclic voltammograms (scan rates 1 mV/s, 0.5 mV/s and 0.2 mV/s for the charts from left to right); electrolyte solution 1 M LiPF₆ in EC/DMC. Red curve depicts the voltammogram of LiFePO₄/PVP-POA(1/6) composite film (0.98 mg/cm²). Blue curve is for the pure polymer PVP-POA(1/6). In this case, the current is normalized against the mass of pure polymer in the composite:

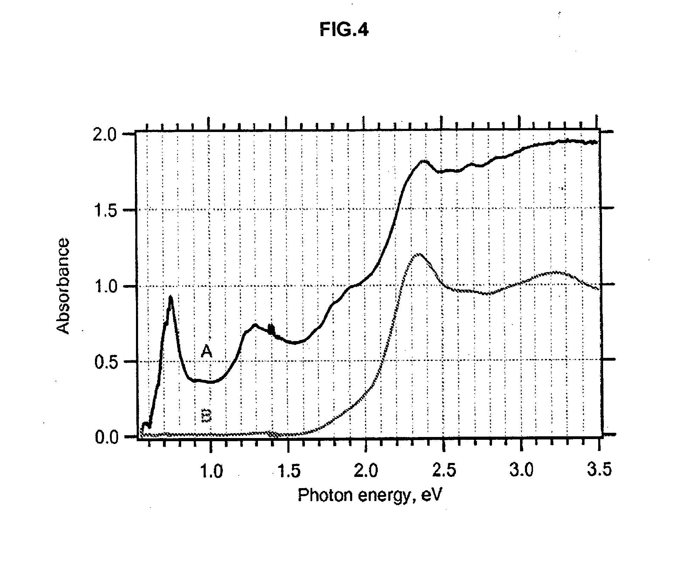

**FIG.4** Vis-NIR spectrum of the working solution of single wall carbon nanotubes dispersed by Ru-complex, Z-907Na/SWCNT (curve A) and pure Ru-complex Z-907Na (curve B). The concentration of Ru-complex was 6 x 10⁻⁴ mol/L in both cases, the optical cell thickness was 2 mm.

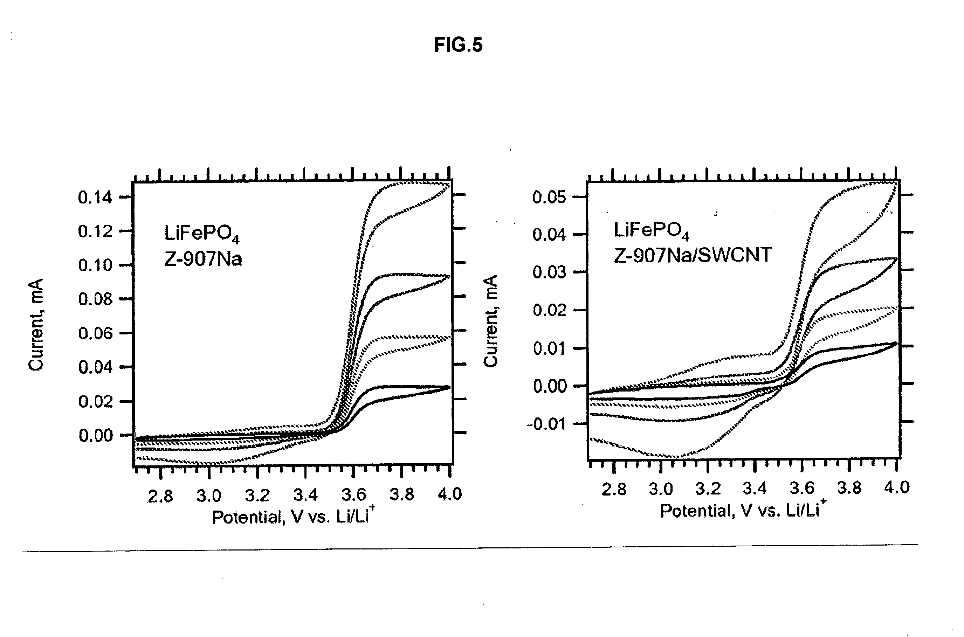

**FIG.5** Pure LiFePO₄ electrode (with 5 % PVDF; total film mass 1.54 mg/cm²) treated by dip coating into 6·10⁻⁴ mol/L solution of Z-907Na (left chart) or Z-907Na/SWCNT (right chart). Scan rates (in mV/s): 50, 20, 10, 5 for curves from top to bottom. Electrolyte solution is 1 M LiPF₆ in EC/DMC.

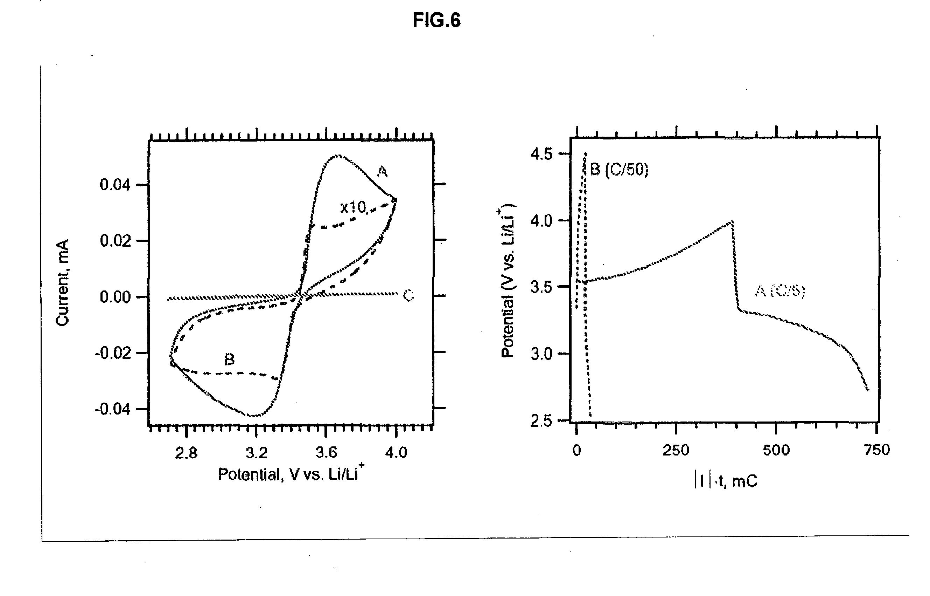

**FIG.6** Left chart: Cyclic voltammograms (scan rates 0.1 mV/s); electrolyte solution 1 M LiPF₆ in EC/DMC. Curve A: Electrode from LiFePO₄ surface-derivatized with Z-907Na/SWCNT (2.04 mg/cm²). Curve B (dashed line): electrode from carbon-coated LiFePO₄ (Nanomyte BE-20, 2.28 mg/cm²). Curve C: Electrode from LiFePO₄ surface-dcrivatized with pyrene butanoic acid/SWCNT (1.83 mg/cm²). The current scale is multiplied by a factor of 10 for curve B.

Right chart: Galvanostatic charge/discharge cycle; electrolyte solution 1 M LiPF₆ in EC/DMC. Curve A: Electrode from LiFePO₄ surface-derivatized with Z-907Na/SWCNT (2.04 mg/cm²) charging rate C/5. Curve B (dashed line): electrode from carbon-coated LiFePO₄ (Nanomyte BE-20, 2.28 mg/cm²) charging rate C/50.
Figures 1 to 3 refer to PART II of the detailed description
Figure 4 to 6 refer to PART III of the detailed description

### PART II: POLYMER WIRING

It has been discovered that the presence of some redox active polymer compounds covered on active material forms an electrochemically addressable electrode system. As illustrated in FIG.2, for a cathodic lithium insertion material and a p-type redox active polymer compound (S), upon positive polarization the p-type redox active compound will be oxidized at current corrector and charges (holes) will be transported from the current collector to the lithium insertion material by the diffusion of the oxidized p-type redox active compound (S+). As the redox potential of the p-type redox active compound is higher or matches closely the Fermi level of the lithium insertion material, S+ will be reduced by the lithium insertion material. Electrons and lithium ions will be withdrawn from it during battery charging. By contrast, during the discharging process, the oxidized species are reduced at current collector and charges (electrons) are transported from the current collector to the lithium insertion material by the diffusion of p-type redox active compound (S). Lithium ions and electrons are injected into the solid, as the redox potential of the p-type redox active compound is lower or matches closely the Fermi level of the lithium insertion material.

The cell is composed of two compartments, where the cathodic compartment comprises a cathodic lithium insertion material and p-type redox active polymer compound(s); the anodic compartment comprises an anodic lithium insertion material and n-type redox active polymer compound(s), which can also act as binder. These two compartments are separated by a separator. Compared to the whole electrode system, the redox active polymer do not occupy any extra volume of the whole electrode system. Hence with respect to prior art, the present invention allows reducing greatly the volume of the conductive additives resulting in a much improved energy storage density. The polymer redox material is not soluble in the working electrolyte so the use of a special separator as described in the European patent application 06 112 361.8 (EP 1,843,426) is not necessary.

According to the present invention, a redox active molecule is attached to the polymer backbone, either by covalent bonding or quternization. A suitable polymer may be selected from polyvinyl pyridine, polyvinyl imidazole, polyethylene oxide, polymethylmethacrylate, polyacrylonitrile, polypropylene, polystyrene, polybutadiene, polyethyleneglycol, polyvinylpyrrolidone, polyaniline, polypyrrole, polythiophene and their derivatives. Preferred polymer is polyvinyl pyridine.

A redox active centre may an organic compound or a metal complex having suitable redox potential as that of the battery material.

In preferred configuration the redox active metal complex or organic compound (D) is of the type given below,

D-⁅Π⁆(Ral)_{q} - (1)

wherein ⁅Π⁆ represents schematically the π system of the aforesaid substituent, Ral represents an aliphatic substituent with a saturated chain portion bound to the π system, and wherein q represents an integer, indicating that ⁅Π⁆ may bear more than one substituent Ral.

The π system ⁅Π⁆ may be an unsaturated chain of conjugated double or triple bonds of the type 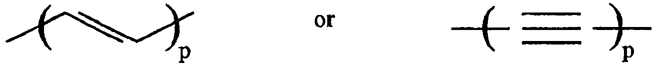 wherein p is an integer from 0 to 20.
or an aromatic group Rar of from 6 to 22 carbon atoms, or a combination thereof.
wherein p is an integer from 0 to 4,
wherein q is an integer from 0 to 4,
wherein Rar is a monocyclic or oligocyclic aryl from C6 to C22,
wherein -Ral is H, -R1, (-O-R1)ₙ, -N(R1)₂, -NHR1, 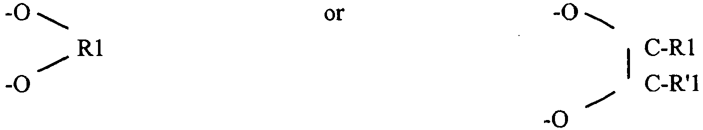 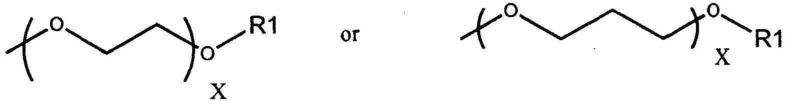 or 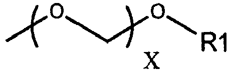 wherein R1, R'1 is an alkyl from 1 to 10 carbon atoms, x ≥ 0,and 0 < n < 5.

According to a preferred embodiment, D is selected from benzol, naphtaline, indene, fluorene, phenantrene, anthracene, triphenylene, pyrene, pentalene, perylene, indene, azulene, heptalene, biphenylene, indacene, phenalene, acenaphtene, fluoranthene, and heterocyclyc compounds pyridine, pyrimidine, pyridazine, quinolizidine, quinoline, isoquinoline, q,uinoxaline, phtalazine, naphthyridine, quinazoline, cinnoline, pteridine, indolizine, indole, isoindole, carbazole, carboline, acridine, phenanthridine, 1,10-phenanthroline, thiophene, thianthrene, oxanthrene, and derivatives thereof, optionally be substituted.

According to a preferred embodiment, D is selected from structures of formula (1-11) given below: 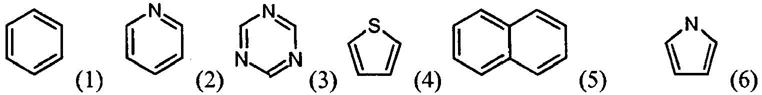 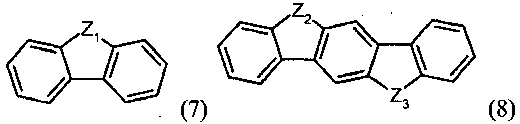 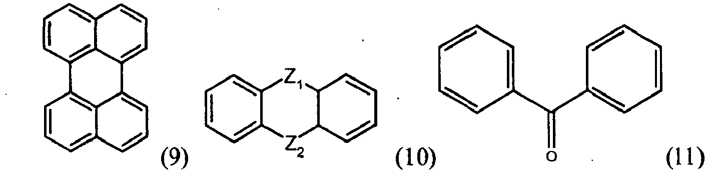 in which each of Z¹, Z² and Z³ is the same or different and is selected from the group consisting of O S, SO, SO₂, NR¹, N⁺(R^{1'})(^{1"}), C(R²)(R³), Si(R^{2'})(R^{3'}) and P(O)(OR⁴), wherein R¹, R^{1'} and R^{1"} are the same or different and each is selected from the group consisting of hydrogen atoms, alkyl groups, haloalkyl groups, alkoxy groups, allcoxyalkyl groups, aryl groups, aryloxy groups, and aralkyl groups, which are substituted with at least one group of formula -N⁺(R⁵)₃ wherein each group R⁵ is the same or different and is selected from the group consisting of hydrogen atoms, alkyl groups and aryl groups, R², R³, R^{2'} and R^{3'} are the same or different and each is selected from the group consisting of hydrogen atoms, alkyl groups, haloallcyl groups, alkoxy groups, halogen atoms, nitro groups, cyano groups, alkoxyalkyl groups, aryl groups, aryloxy groups and aralkyl groups or R² and R³ together with the carbon atom to which they are attached represent a carbonyl group, and R⁴ is selected from the group consisting of hydrogen atoms, alkyl groups, haloalkyl groups, alkoxyalkyl groups, aryl groups, aryloxy groups and aralkyl groups.

Preferred embodiments of, structure (10) for D may be selected from structures (12) and (13) below:

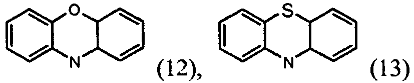

Alternatively a redox active centre may be a metal complex having suitable redox potential as that of the battery material.

These aims are achieved by using, as a ligand, an organic compound L1 having a formula selected from the group of formulae (14) to (27) 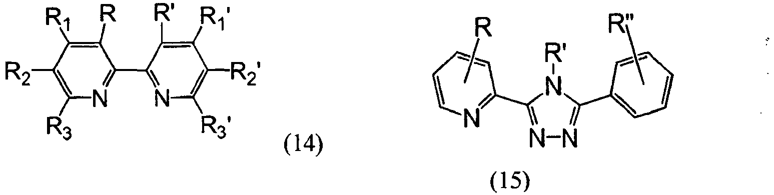 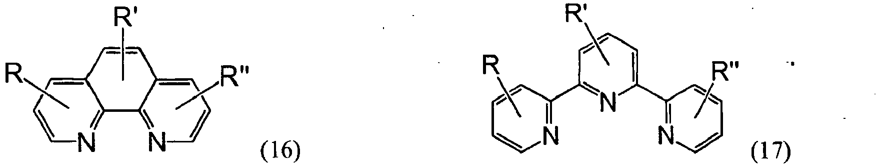 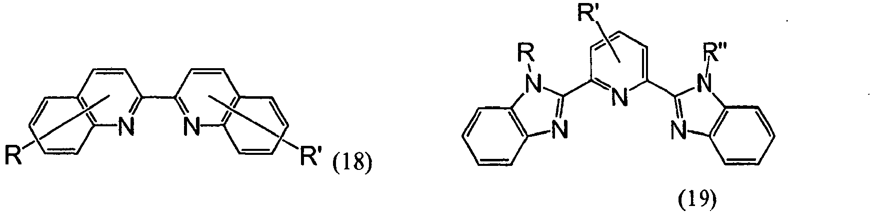 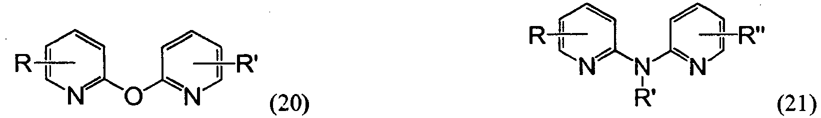 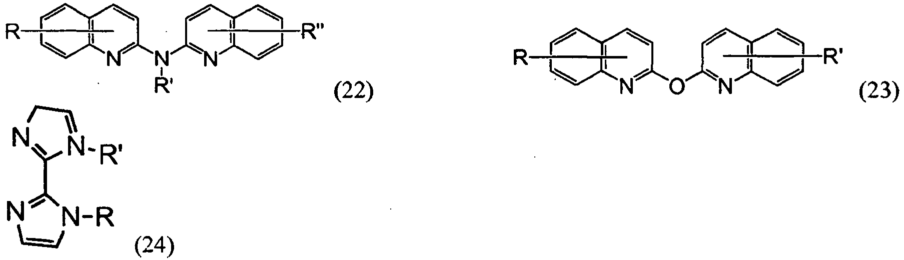 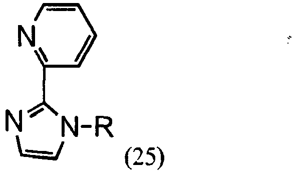 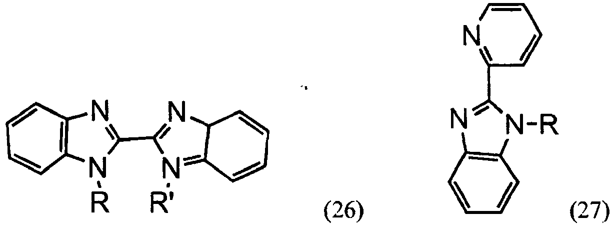 wherein at least one of substituents -R, -R₁, -R₂, -R₃,
-R', -R₁', -R₂', -R₃', -R" comprises an additional π system located in conjugated relationship with the primary π system of the bidentate or respectively tridentate structure of formulae (14) to (27).

In preferred compounds L1, the said substituent is of the type

-R = ⁅Π⁆(̵Ral)_{q}

wherein ⁅Π⁆ represents schematically the π system of the aforesaid substituent, Ral represents an aliphatic substituent with a saturated chain portion bound to then system, and wherein q represents an integer, indicating that ⁅Π⁆ may bear more than one substituent Ral.

The π system ⁅Π⁆ may be an unsaturated chain of conjugated double or triple bonds of the type 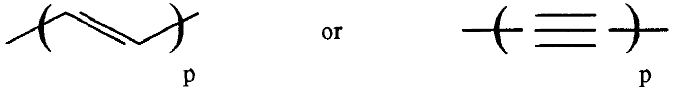 wherein p is an integer from 0 to 8.
or an aromatic group Rar of from 6 to 22 carbon atoms, or a combination thereof.

The presence of an aromatic group is preferred, since it is less sensitive to oxidation than a long chain of conjugated double or triple bonds.

Among suitable aromatic groups, there are monocyclic aryls like benzene and annulenes, oligocyclic aryls like biphenyle, naphthalene, biphenylene, azulene, phenanthrene, anthracene, tetracene, pentacene, or perylene. The cyclic structure of Rar may incorporate heteroatoms.

In metal complexes as redox active centers, the preferred ligands coordinated to the metal, according to the invention are organic compounds L1 having a formula selected from the group of formulae (14) to (27) 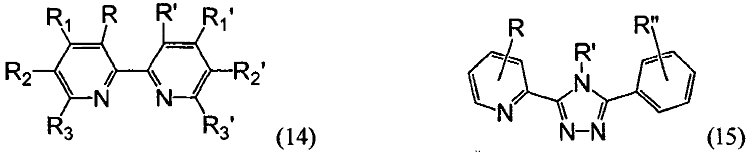 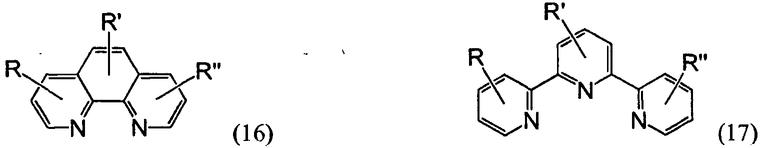 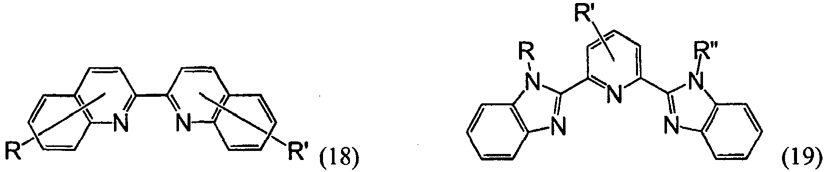 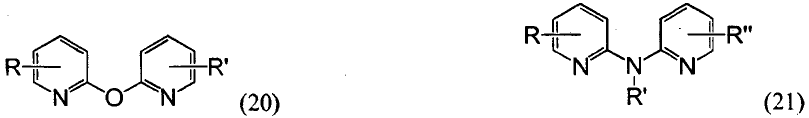 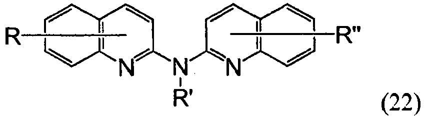 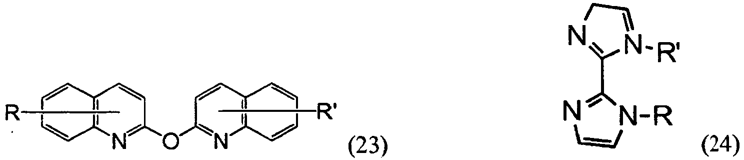 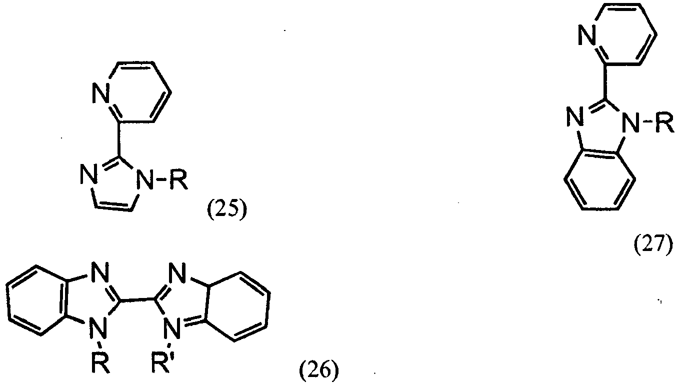 wherein at least one of the substituents -R, -R₁, -R₂, -R₃,
-R', -R₁', -R₂', -R₃', -R" is of formula (2), (3) or (4) 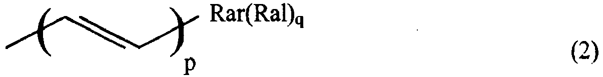 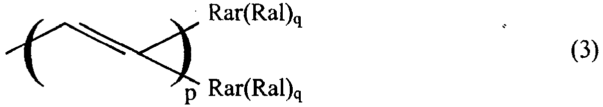 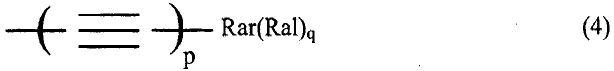 wherein p is an integer from 0 to 4,
wherein q is an integer from 0 to 4,
wherein Rar is a monocyclic or oligocyclic aryl from C6 to C22,
wherein -Ral is H, -R¹, (-O-R1)_{n,} -N(R1)₂, -NHR1, 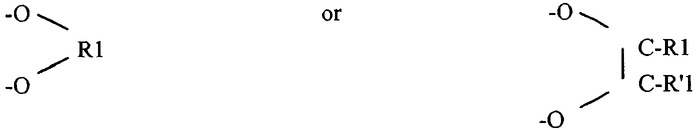 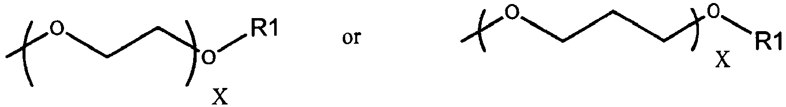 or 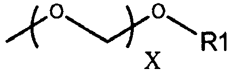 wherein R1, R'1 is an alkyl from 4 to 10 carbon atoms, x ≥ 0, and 0 < n < 5 and
wherein the other one(s) of substituent(s) -R, -R₁, -R₂, -R₃, -R', -R₁', -R₂', -R₃', - R"is (are) the same or a different substituents of formula (1), (2) or (3), or is (are) selected from -H, -OH, -R₂, -OR₂ or -N(R₂)₂, wherein R₂ is an alkyl of 1 to 20 carbon atoms.

The resulting compound is an organometallic complex of a metal Me selected from the group consisting of Ru, Os and Fe, comprising as a ligand a compound L and L1 as described herein before, said complex being of formula

Me L1 L(Z)₂ (5)

if L and L1 are the same or different from a compound of formulas (15), (16), (18), (20), (21), (22) or (23),(24), (25), (26), (27), (28) 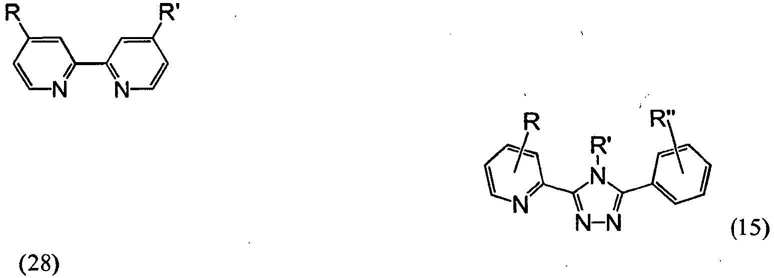 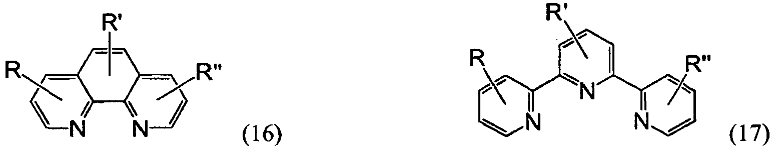 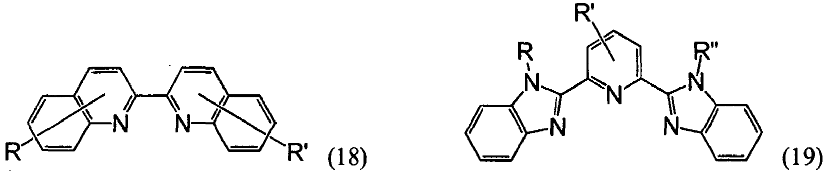 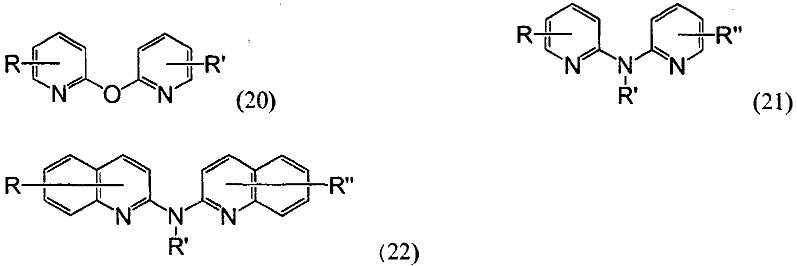 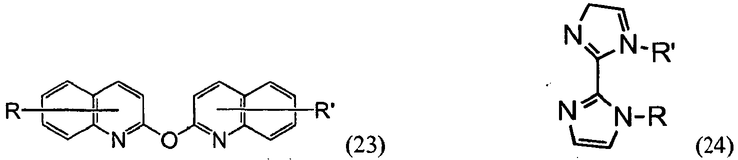 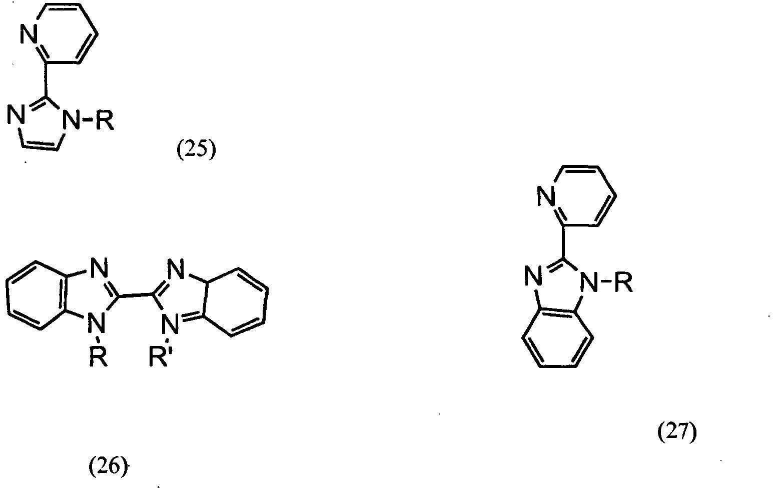 and of formula

Me L2 L Z (6)

if L is from a compound of formula (15), (16), (18), (20), (21), (22), (23) or (24),(25), (26), (27), (28) and L2 is a compound of formula (17) or (19) 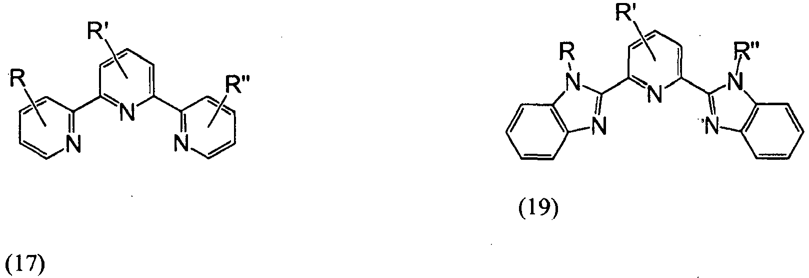 wherein Z is selected from the group consisting of H₂O, Cl, Br, CN, NCO, NCS and NCSe and
wherein in L at least one of substituents R, R', R" comprises a π system in conjugated relationship with the π system of the bidentate, respectively the tridentate structure of formulae (14) to (28),
and wherein the other one(s) of substituents R, R', R" is (are) the same or a different substituent including a π system, or is (are) selected from H, OH, R2, (OR2)ₙ, N(R2)₂, where R2 is an alkyl of 1-20 carbon atoms and 0<n<5.
and of formula

Me L1 (L2)(L3) (7)

wherein L1, L2 and L3 are the same or different from a compound of formula (14), (15), (16), (18), (20), (21), (22), (23),(24), (25), (26), (27) or (28)
and of formula

Me (L1)(L2) (8)

wherein L1 and L2 may be same or different, and at least one of substituents R, R', R" comprises a π system in conjugated relationship with the n system of the tridentate structure of formulae (17) to (19),
and wherein the other one(s) of substituents R, R', R" is (are) the same or a different substituent including a π system, or is (are) selected from H, OH, R2, (OR2)ₙ, N(R2)₂, where R2 is an alkyl of 1-20 carbon atoms and 0<n<5.

### EXAMPLE 1

### Materials

LiFePO₄ was synthesized by a variant of solid state reaction ^{[17]} employing FeC₂O₄.2H₂O and LiH₂PO₄ as precursors. Their stoichiometric amounts were mixed and ground in a planetary ball-milling machine for 4 h. Then the powder was calcined in a tube furnace with flowing Ar-H₂ (92:8 v/v) at 600 °C for 24 h. After cooling down to room temperature, the sample was ground in agate mortar. The BET surface area of the powder was ca. 5 m²/g with an average particle size of 400 nm. X-ray diffraction confirmed the phase purity. The BET surface area of the powder was ca. 5 m²/g with an average particle size of 400 nm.

**Synthesis of 10-(12'-bromododecyl) phenoxazine.** Sodium hydride (55 % dispersion in mineral oil; 119 mg, 4.97 mmol) was stirred in dry THF under argon atmosphere. Phenoxazine (500 mg, 2.73 mmol) was added to a stirred suspension of the sodium hydride in THF. The mixture was stirred to form phenoxazine N-sodium salt for 2 hours at 50°C. 1,12-dibromododecane (8962 mg, 27.3 mmol) was added to the solution and stirred vigorously for 24 hours at room temperature. The mixture was filtered and evaporated under reduced pressure. The excess 1,12-dibromododecane was recovered from the mixture by Kugelohr distillation (163°C, 0.1 mmHg). 10-(12'-bromododecyl) phenoxazine was distilled at 225°C by Kugelohr distillation. The material was kept in inert atmosphere. The product was identified by ¹H NMR spectrum. ¹H NMR (400 MHz; CDCl₃); δ (ppm); 6.80 (2H, Ar-H), 6.67 (4H, Ar-H), 6.48 (2H, Ar-H), 3.49 (2H, t), 3.44 (2H, t), 1.87 (2H, m), 1.67 (2H, m), 1.42 (16 H, m).

### Synthetic Route:

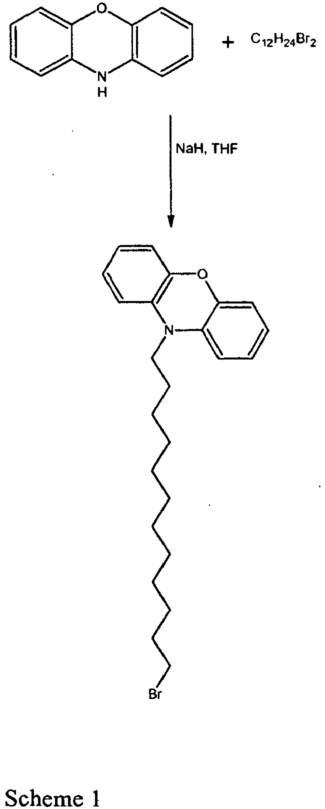

Poly(4-(-(10-(12'-dodecyl phenoxazine)pyridinium)-co-4-vinylpyridine). To a solution of poly(4-vinylpyridine) (number average molecular weight; 160, 000) (173 mg) in 15 ml DMF was added LiTFSI (260 mg) and 10-(12'-bromododecyl) phenoxazine (111mg, 0.26 mmoles). The solution was mechanically stirred at 50 °C for 36h. The solution was cooled to room temperature and then diethyl ether was added slowly to obtain a precipitate of Poly(4-(-(10-(12'-bromododecyl phenoxazine)pyridinium)-co-4-vinylpyridine). The solid was collected by a vacuum filtration and dried under vacuum at 35 °C for 8 hrs. This redox polymer is insoluble in common organic solvents hampering the characterization of this material. The molar ratio of pyridine to phenoxazine was 1/6; the polymer is further abbreviated PPV-POA (1/6).

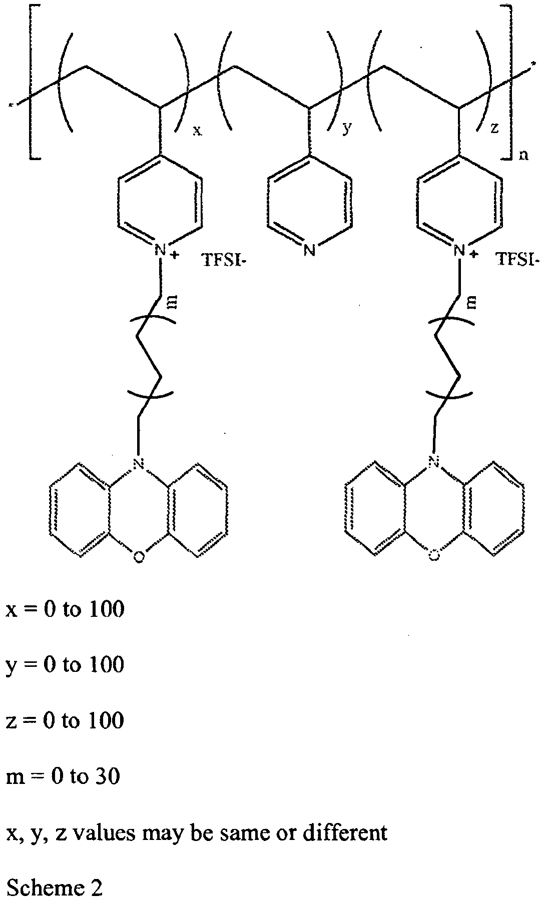

### Electrochemical Methods

The polymer PVP-POA(1/6) was stirred with γ-butyrolactone for several hours until a viscous slurry was obtained. This slurry was further mixed with LiFePO₄ powder while the proportion of PVP-POA(1/6) in the solid mixture with LiFePO₄ was 10 wt%. This slurry was stirred again overnight. The mixing and homogenization was sometimes also promoted by sonication in ultrasound bath. The resulting homogeneous slurry was then doctor-bladed onto F-doped conducting glass (FTO) and dried at 100°C. The typical film mass was ca. 1 mg/cm². Blank electrodes from pure PVP-POA(1/6) were prepared in the same way for reference experiments. In this case, the typical film mass was 0.1 to 0.2 mg/cm²_{.}

Electrochemical experiments employed an Autolab PGSTAT 30 potentiostat. The electrolyte was 1 M LiPF₆ in ethylene carbonate (EC)/dimethyl carbonate (DMC) (1:1, v:v). The reference and counter electrodes were from Li-metal.

### Results and discussion

Fig. 1 (left chart) shows the cyclic voltammograms of pure PVP-POA(1/6) film. Independent of the scan rate, the integrated charge for anodic/cathodic process was between 4 to 5.2 mC, which gives ca. 28-37 C/g for the electrode in Fig. 1. This is roughly half of the expected specific charge capacity of PVP-POA(1/6) assuming the molecular formula as in Scheme 2. The redox couple with formal potential at ca. 3.5 V vs. Li/Li⁺ is obviously assignable to phenoxazine, but the origin of the second redox couple at ca. 3.75 V vs. Li/Li⁺ is not clear. We should note that the PVP-POA(1/6) film reversibly switches to red color in the oxidized state.

Fig. 1 (right chart) shows the cyclic voltammograms of LiFePO₄/PVP-POA(1/6) composite film. At faster scan rates, the electrode exhibits characteristic plateau of anodic currents, which is a signature of molecular wiring ^{[15]} or redox targeting ^{[16]}. In the first case, the redox species is adsorbed on the LiFcPO₄ surface ^{[151]}, whereas in the second case, the charge is transported by molecules dissolved in the electrolyte solution ^{[16]}.

Obviously, the phenoxazine, which is covalently bonded to a polymer backbone, acts as a mediator, providing holes to interfacial charge transfer of LiFePO₄. The long (C₁₂) aliphatic chain grants sufficient swinging flexibility to the redox mediator, so that it can reach the olivine surface. We suggest calling this effect as "polymer wiring". Its advantage over molecular wiring ^{[15]} consists in the fact, that the amount of redox material can be easily increased above the monolayer coverage. This would allow running larger currents, as the process is not limited by the speed of cross-surface hole percolation. The polymer wiring thus resembles the redox targeting ^{[16]}. However, the electrochemical cell employing polymer wiring does not require any molecular separator between the cathode and anode, which would prevent undesired transport of the redox-targeting molecule to the other electrode ^{[16]}. Hence, the polymer wiring seems to be the optimum strategy for enhancement of the electrochemical activity of virtually insulating materials like LiFePO₄. It combines the advantages of both approaches: (i) fixed redox species near the LiFePO₄ surface and (ii) larger amount of available redox species for wiring. The latter fact is also beneficial for the electrode stability, as the system is less sensitive to imperfections in the adsorbed monolayer of redox relay ^{[15]}.

At high scan rates, such as 50 mV/s, the polymer wiring is, however, not fast enough for charging of LiFePO₄ to a significant capacity. For the electrode in Fig. 2, the polymer wiring provides only 1.5 C/g of anodic charge at these conditions. This charge is actually smaller than that, which would correspond to a pure PVP-POA(1/6) polymer in the mixture. This is demonstrated by the blue curve in Fig. 2, where the cyclic voltammogram of pure PVP-POA(1/6) is shown, while the voltammograms for pure polymer was scaled considering the actual amount of polymer in the composite.

However, this charge balance changes in favor for charging of LiFePO₄ at slower scan rates. Fig. 3 evidences that the LiFePO₄ can be charged via the polymer by charges exceeding significantly the intrinsic charge capacity of the pure polymer present in the composite. For instance, at 0.1 mV/s, the electrode shown in Fig. 3 delivered 22 mAh/g of anodic charge.

### Reference List polymer wiring

[1] A. K. Padhi, K. S. Nanjundasawamy, J. B. Goodenough, J.Electrochem.Soc. 1997, 144, 1188-1194.
[2] C. Delacourt, L. Laffont, R. Bouchet, C. Wurm, J. B. Leriche, M. Mocrette, J. M. Tarascon, C. Masquelier, J.Electrochem.Soc. 2005, 153, A913-A921.
[3] P. S. Herle, B. Ellis, N. Coombs, L. F. Nazar, Nature Mat. 2004, 3, 147-152.
[4] M. Yonemura, A. Yamada, Y. Takei, N. Sonoyama, R. Kanno, J.Electrochem.Soc. 2004, 151, A1352-A1356.
[5] F. Zhou, K. Kang, T. Maxisch, G. Ceder, D. Morgan, Solid State Comm. 2004, 132, 181-186.
[6] B. Ellis, L. K. Perry, D. H. Ryan, L. F. Nazar, J.Am.Chem.Soc. 2006, 128.
[7] R. Dominko, M. Bele, M. Gaberseck, M. Remskar, D. Hanzel, J. M. Goupil, S. Pejovnik, J. Jamnik, J.Power Sources 2006, 153, 274-280.
[8] T. Nakamura, Y. Miwa, M. Tabuchi, Y. Yamada, J.Electrochem.Soc. 2006, 153, A1108-A1114.
[9] J. Ma, Z. Qin, J.Power Sources 2005,148, 66-71.
[10] N. H. Kwon, T. Drezen, I. Exnar, I. Teerlinck, M. Isono, M. Grätzel, Electrochem.Solid State Lett. 2006, 9, A277-A280.
[11] A. Yamada, M. Hosoya, S. C. Chung, Y. Kudo, K. Hinokuma, K. Y. Liu, Y. Nishi, J.PowerSources 2003, 119-121, 232-238.
[12] G. Li, H. Azuma, M. Tohda, Electrochem.Solid State Lett. 2002, 5, A135-A137.
[13] C. Delacourt, P. Poizot, M. Morcrette, J. M. Tarascon, C. Masquelier, Chem.Mater. 2004,16, 93-99.
[14] S. Y. Chung, J. T. Bloking, Y. M. Chiang, Nature Mat. 2002, 1, 123-128.
[15] Q. Wang, N. Evans, S. M. Zekeeruddin, I. Exnar, M. Grätzel, Nature Mat. 2006.
[16] Q. Wang, S. M. Zakeeruddin, D. Wang, I. Exnar, M. Grätzel, Angew.Chem. 2006.
[17] D. Wang, H. Li, Z. Wang, X. Wu, Y. Sun, X. Huang, L. Chen, J.Solid State Chem. 2004,177, 4582-4587.

### PART III : NANOTUBE WIRING

It has been discovered that some amphiphilic redox active molecules interact to SWCNT can further anchor with the surface of electrode active material such as LiFePO₄ (olivine). The assembly of redox molecule and SWCNT thus covers the surface of the active material, forming an electrochemically addressable electrode system. For cathodic lithium insertion material upon positive polarization the donor redox active compound (D) will be oxidized at current corrector and charges (holes) will be transported from the current collector to the lithium insertion material by the oxidized form of the redox active compound (D⁺). As the redox potential of the redox active compound is higher or matches closely the Fermi level of the lithium insertion material, D⁺ will be reduced by the lithium insertion material. Electrons and lithium ions will be withdrawn from it during battery charging. By contrast, during the discharging process, the oxidized species are reduced at current collector and charges (electrons) are transported from the current collector to the lithium insertion material by the redox active compound (D). Lithium ions and electrons are injected into the solid, as the redox potential of the redox active compound is lower or matches closely the Fermi level of the lithium insertion material.

The cell is composed of two compartments, where the cathodic compartment comprises a cathodic lithium insertion material and redox active compound(s); the anodic compartment comprises an anodic lithium insertion material and redox active compound(s). These two compartments are separated by a separator. Compared to the whole electrode system, the redox active adsorbate does not occupy any significant extra volume of the whole electrode system. Hence with respect to prior art, the present invention allows reducing greatly the volume of the conductive additives resulting in a much improved energy storage density. The redox adsorbate is not soluble in the working electrolyte so the use of a special separator as described in the European patent application 06 112 361.8 (EP 1,843,426) is not necessary.

According to the present invention, a redox active molecule is attached to the SWCNT backbone by non-covalent bonding. A redox active centre (D) may be an organic compound or a metal complex having suitable redox potential as that of the battery material. In preferred configuration the redox active metal complex or organic compound (D) is localized between the SWCNT surface and the surface of electrode active material.

SWCNT-D-[M] (1)

Wherein [M] represents schematically the electrode material

### DEFINITIONS

As used herein, the term "donor-type redox active compound" refers to those compounds that are present in the cathodic compartment of the cell, and act as molecular relay transporting charges between current collector and cathodic lithium insertion material upon charging/discharging. On the other hand, the term "acceptor-type redox active compound" refers to the molecules that present in the anodic compartment of the cell, and act as molecular relay transporting charges between current collector and anodic lithium insertion material upon charging/discharging.

A redox active centre may be an organic compound or a metal complex having suitable redox potential as that of the lithium insertion material.

In preferred configuration the redox active metal complex or organic compound (D) is of the type given below,

D⁅Π⁆(̵Ral)_{q}

wherein ⁅Π⁆ represents schematically the π system of the aforesaid substituent, Ral represents an aliphatic substituent with a saturated chain portion bound to the π system, and wherein q represents an integer, indicating that ⁅Π⁆ may bear more than one substituent Ral.

The π system ⁅Π⁆ may be an unsaturated chain of conjugated double or triple bonds of the type 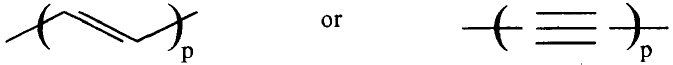 wherein p is an integer from 0 to 20.
or an aromatic group Rar of from 6 to 22 carbon atoms, or a combination thereof.
wherein p is an integer from 0 to 4,
wherein q is an integer from 0 to 4,
wherein Rar is a monocyclic or oligocyclic aryl from C6 to C22,
wherein -Ral is H, -R1, (-O-R1)ₙ, -N(R1)₂, -NHR1, 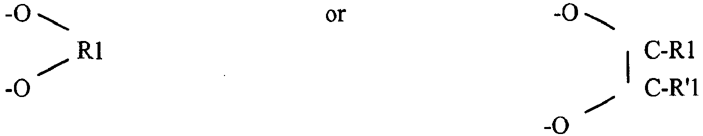 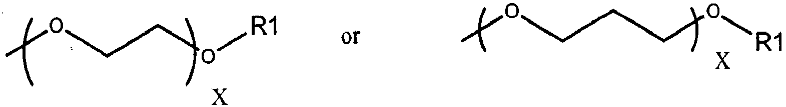 or 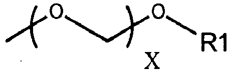 wherein R1, R'1 is an alkyl from 1 to 10 carbon atoms, x ≥ 0,and 0 < n < 5.

According to a preferred embodiment, D is selected from benzol, naphtaline, indene, fluorene, phenantrene, anthracene, triphenylene, pyrene, pentalene, perylene, indene, azulene, heptalene, biphenylene, indacene, phenalene, acenaphtene, fluoranthene, and heterocyclyc compounds pyridine, pyrimidine, pyridazine, quinolizidine, quinoline, isoquinoline, quinoxaline, phtalazine, naphthyridine, quinazoline, cinnoline, pteridine, indolizine, indole, isoindole, carbazole, carboline, acridine, phenanthridine, 1,10-phenanthroline, thiophene, thianthrene, oxanthrene, and derivatives thereof, optionally be substituted.

According to a preferred embodiment, D is selected from structures of formula (1-11) given below: 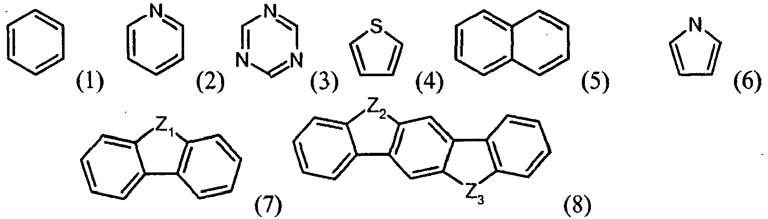 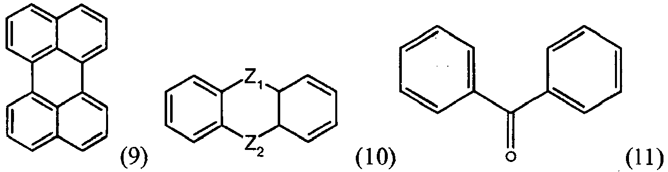 in which each of Z¹, Z² and Z³ is the same or different and is selected from the group consisting of O, S, SO, SO₂, NR¹, N⁺(R^{1'})(^{1''}), C(R²)(R³) Si(R^{2'})(R^{3'}) and P(O)(OR⁴), wherein R¹, R^{1'} and R^{1''} are the same or different and each is selected from the group consisting of hydrogen atoms, alkyl groups, haloalkyl groups, alkoxy groups, alkoxyallcyl groups, aryl groups, aryloxy groups, and aralkyl groups, which are substituted with at least one group of formula -N⁺R⁵)₃ wherein each group R⁵ is the same or different and is selected from the group consisting of hydrogen atoms, alkyl groups and aryl groups, R², R³, R^{2'} and R^{3'} are the same or different and each is selected from the group consisting of hydrogen atoms, alkyl groups, haloalkyl groups, alkoxy groups, halogen atoms, nitro groups, cyano groups, alkoxyalkyl groups, aryl groups, aryloxy groups and aralkyl groups or R² and R³ together with the carbon atom to which they are attached represent a carbonyl group, and R⁴ is selected from the group consisting of hydrogen atoms, alkyl groups, haloalkyl groups, allcoxyalkyl groups, aryl groups, aryloxy groups and aralkyl groups.

Preferred embodiments of, structure (10) for D may be selected from structures (12) and (13) below:

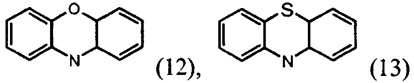

Alternatively a redox active centre may be a metal complex having suitable redox potential as that of the lithium insertion material.

These aims are achieved by using, as a ligand, an organic compound L1 having a formula selected from the group of formulae (14) to (27) 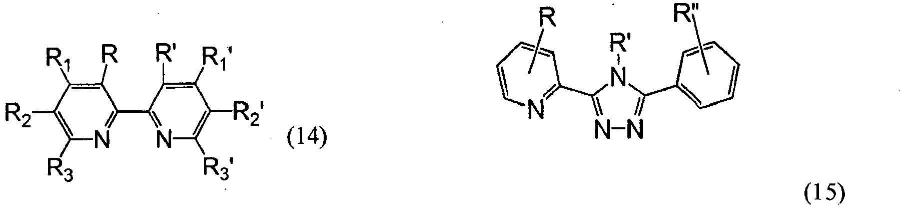 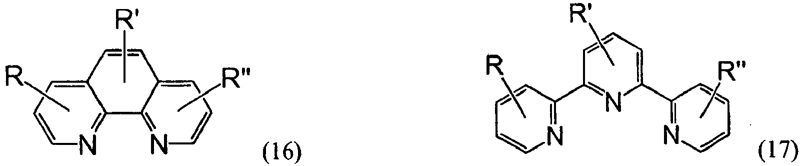 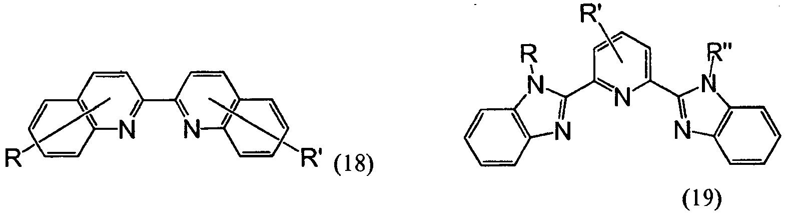 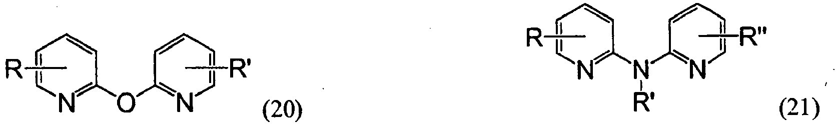 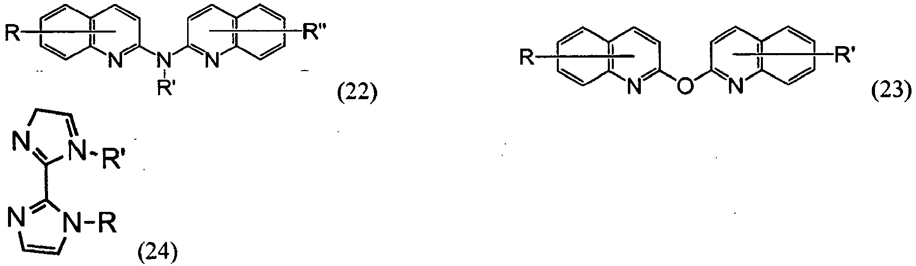 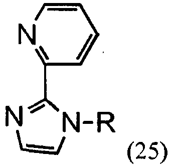 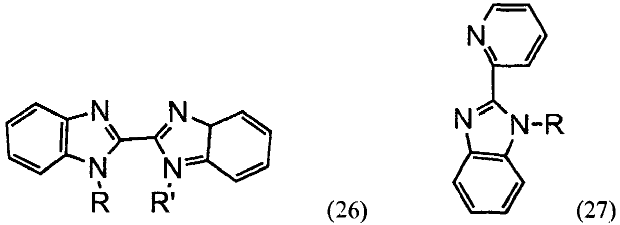 wherein at least one of substituents -R, -R₁, -R₂, -R₃,
-R', -R₁', -R₂', -R₃', -R" comprises an additional π system located in conjugated relationship with the primary system of the bidentate or respectively tridentate structure of formulae (14) to (27).

In preferred compounds L1, the said substituent is of the type

-R = ⁅Π⁆(̵Ral)_{q}

wherein ⁅Π⁆ represents schematically the π system of the aforesaid substituent, Ral represents an aliphatic substituent with a saturated chain portion bound to the π system, and wherein q represents an integer, indicating that ⁅Π⁆ may bear more than one substituent Ral.

The π system ⁅Π⁆ may be an unsaturated chain of conjugated double or triple bonds of the type 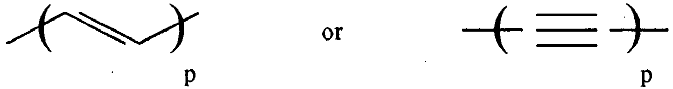 wherein p is an integer from 0 to 8.
or an aromatic group Rar of from 6 to 22 carbon atoms, or a combination thereof.

The presence of an aromatic group is preferred, since it is less sensitive to oxidation than a long chain of conjugated double or triple bonds.

Among suitable aromatic groups, there are monocyclic aryls like benzene and annulenes, oligocyclic aryls like biphenyle, naphthalene, biphenylene, azulene, phenanthrene, anthracene, tetracene, pentacene, perylene or pyrene. The cyclic structure of Rar may incorporate heteroatoms.

In metal complexes as redox active centers, the preferred ligands coordinated to the metal, according to the invention are organic compounds L1 having a formula selected from the group of formulae (14) to (27) 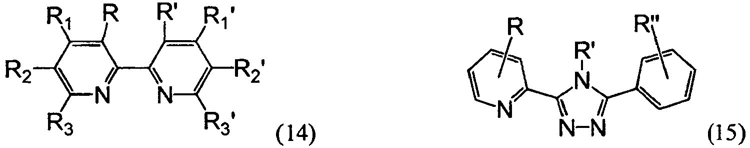 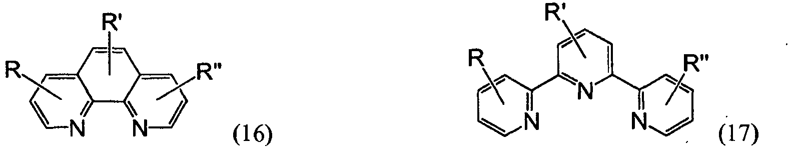 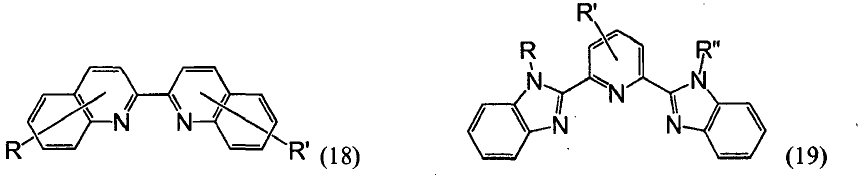 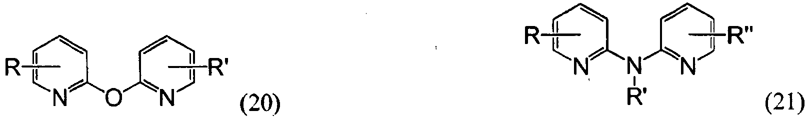 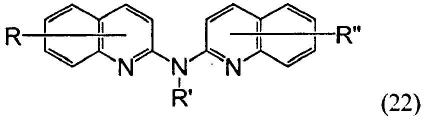 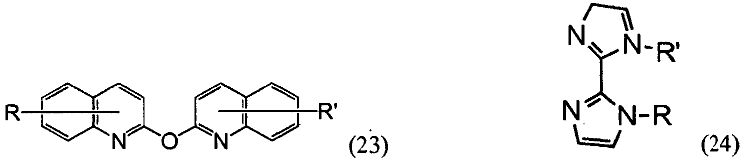 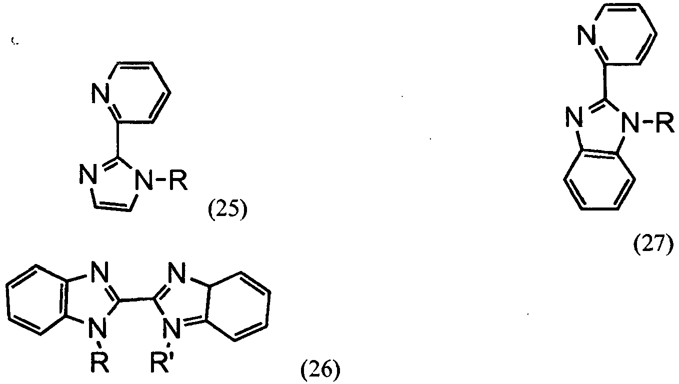 wherein at least one of the substituents -R, -R₁ -R₂, -R₃,
-R', -R₁', -R₂', -R₃', -R" is of formula (1), (2) or (3) 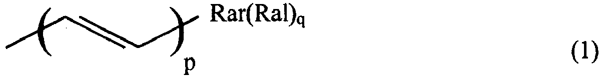 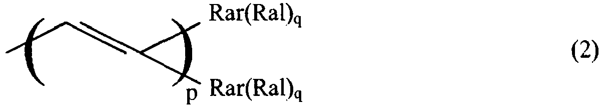 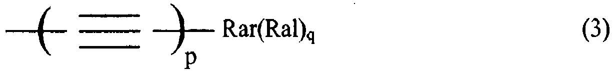 wherein p is an integer from 0 to 4,
wherein q is an integer from 0 to 4,
wherein Rar is a monocyclic or oligocyclic aryl from C6 to C22,
wherein -Ral is H, -R₁ (-O-R1)_{n,} -N(R1)_{2,} -NHR1, 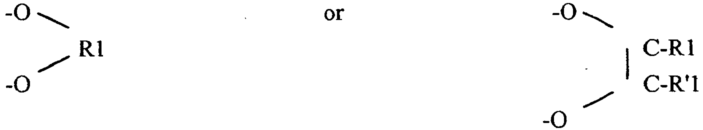 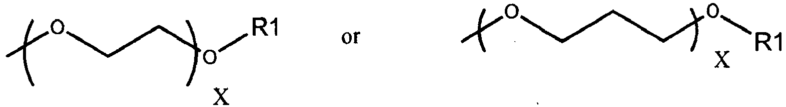 or 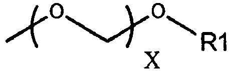 wherein R¹ R'1 is an alkyl from 4 to 10 carbon atoms, x ≥ 0,and 0 < n < 5 and
wherein the other one(s) of substituent(s) -R, -R₁,-R₂, -R₃, -R', -R₁',-R₂', -R₃', - R"is (are) the same or a different substituents of formula (1), (2) or (3), or is (are) selected from -H, -OH, -R₂, -OR₂ or -N(R₂)₂, wherein R₂ is an alkyl of 1 to 20 carbon atoms.

The resulting compound is an organometallic complex of a metal Me selected from the group consisting of Ru, Os and Fe, comprising as a ligand a compound L and L1 as described herein before, said complex being of formula

Me L1 L(Z)₂ (I)

if L and L1 are the same or different from a compound of formulas (15), (16), (18), (20), (21), (22) or (23),(24), (25), (26), (27), (28) 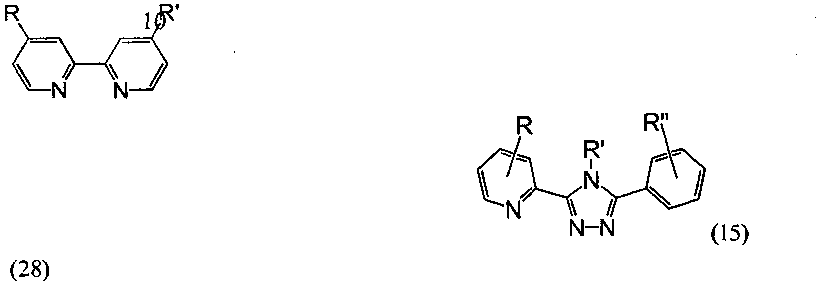 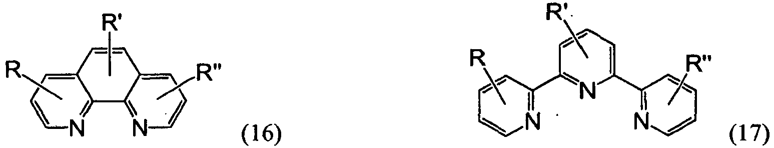 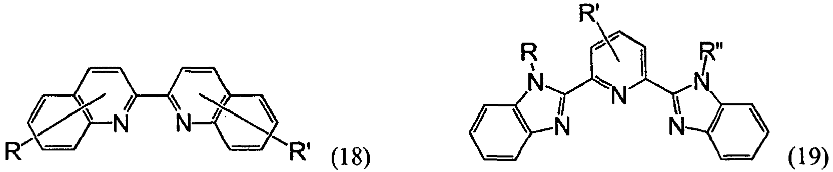 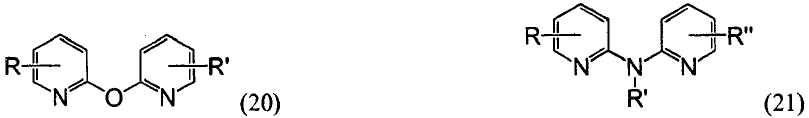 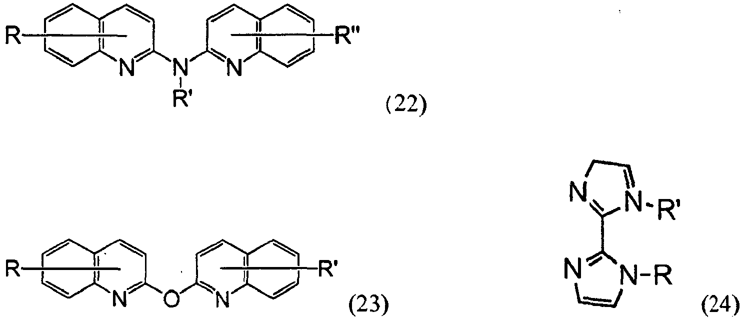 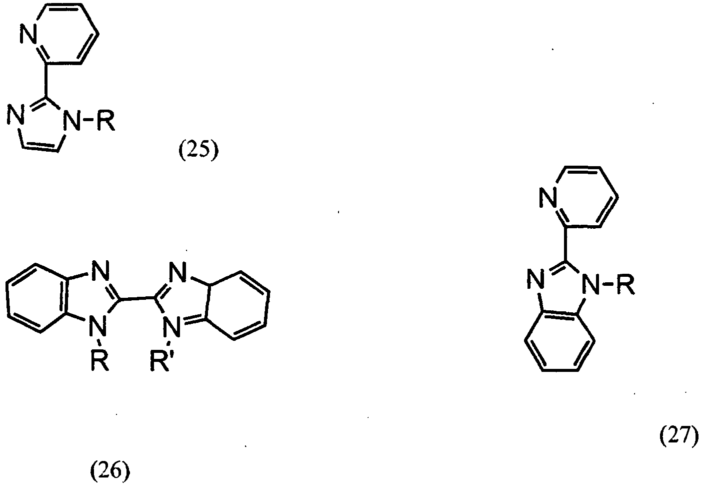 and of formula

Me L2 L Z (II)

ifL is from a compound of formula (15), (16), (18), (20), (21), (22), (23) or (24),(25), (26), (27), (28) and L2 is a compound of formula (17) or (19) 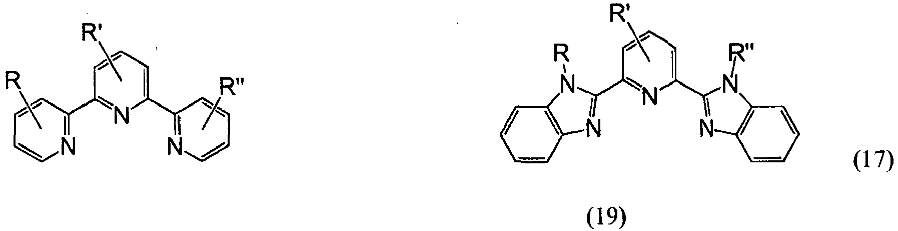 wherein Z is selected from the group consisting of H₂O, Cl, Br, CN, NCO, NCS and NCSe and
wherein in L at least one of substituents R, R', R" comprises a π system in conjugated relationship with the π system of the bidentate, respectively the tridentate structure of formulae (14) to (28),
and wherein the other one(s) of substituents R, R', R" is (are) the same or a different substituent including a π system, or is (are) selected from H, OH, R2, (OR2)ₙ, N(R2)₂, where R2 is an alkyl of 1-20 carbon atoms and 0<n<5.
and of formula

Me L1 (L2)₂ (3)

wherein L1 and L2 are the same or different from a compound of formula (14), (15), (16), (18), (20), (21), (22), (23),(24), (25), (26), (27) or (28)
and of formula

Me (L2)(L2) (4)

wherein L2 may be same or different, in L2 at least one of substituents R, R', R" comprises a π system in conjugated relationship with the π system of the tridentate structure of formulae (17) and (19),
and wherein the other one(s) of substituents R, R', R" is (are) the same or a different substituent including a π system, or is (are) selected from H, OH, R2, (OR2)ₙ, N(R2)₂, where R2 is an alkyl of 1-20 carbon atoms and 0<n<5.

The following example illustrates an embodiment that does not form part of the invention but represents the technological background which is useful for understanding the invention.

### EXAMPLE 1

### Materials

LiFePO₄ was synthesized by a variant of solid state reaction ^{[15]} employing FeCO₂O₄.H₂O and LiH₂PO₄ as precursors. Their stoichiometric amounts were mixed and ground in a planetary ball-milling machine for 4 h. Then the powder was calcined in a tube furnace with flowing Ar-H₂ (92:8 v/v) at 600 °C for 24 h. After cooling down to room temperature, the sample was ground in agate mortar. The BET surface area of the powder was ca. 5 m²/g with an average particle size of 400 nm. X-ray diffraction confirmed the phase purity. The Ru-bipyridine complex, NaRu(4-carboxylic acid-4'-carboxylate(4,4'-dionyl-2,2'bipyridine)(NCS)₂, coded as Z-907Na was synthesized as described elsewhere ^{[16]}. Single walled carbon nanotubes were grown by catalytic laser ablation method. The average diameter of tubes was determined by Raman and Vis-NIR spectroscopy to be ca. 1.3-1.4 nm. Other chemicals were from commercial sources and were used as received.

SWCNT were dispersed with solutions of surfactants (either pyrene butanoic acid in dimethylformamide (DMF) or Z-907Na in acetonitrile+*tert*-butanol (1:1) (AN/t-BuOH) by sonication. The optimized synthetic protocol for Z-907Na was as follows: 9 mg of SWCNT was sonicated for 2 hours with 10 mL of 6.10⁻⁴ M Z-907Na in acetonitrile+ t-butanol (1:1). The resulting black-brown solution was centrifuged at 5000 rpm for 1 hour, while ca. 4 mg of undissolved carbon remained as a sediment. This working solution (abbreviated further as Z-907Na/SWCNT) was stable for at least weeks at room temperature without precipitation. Hence, the solution contained ca. 5 mg of dispersed SWCNT (417 µmol) and 6 µmol of Z-907Na (molar ratio C/Z-907Na ≈ 70). The olivine LiFePO₄ (200 mg) was mixed with several portions (0.5 - 0.7 mL) of this working solution. At the initial stages, the supernatant turned to colorless within several seconds after mixing. After each addition of the Z-907Na/SWCNT solution, the slurry was centrifuged, supernatant separated and a next portion of the solution was added. This procedure was repeated until the supernatant did not decolorize. The total amount of applied solution was 1.5 mL. Finally the powder was washed with AN/t-BuOH and dried at room temperature. The same synthetic protocol was also adopted also for surface derivatization of LiFePO₄ with pyrenebutanoic acid/SWCNT.

Electrodes were prepared by mixing the powder of surface derivatized LiFePO₄ with 5 wt% of polyvinylidene fluoride (PVDF) dissolved in N-methyl-2-pyrolidone. The resulting homogeneous slurry was then doctor-bladed onto F-doped conducting glass (FTO) and dried at 100°C overnight. Alternatively the slurry was coated on alumina current collector and dried at 100°C overnight. The typical film mass was 1.5 - 2 mg/cm². Blank electrodes from pure LiFePO₄ were prepared in the same way for reference experiments. A second reference material was a carbon-coated LiFePO₄ (Nanomyte BE-20 from NEI Corporation, USA).

The electrode was assembled in the electrochemical cell with Li reference and counter electrodes or alternatively in the Swagelok cell with Li negative electrode.

### Methods

Vis-NIR spectra were measured at Varian Cary 5 spectrometer in 2 mm glass optical cells. The measurement was carried out in transmission mode with integrating sphere. Electrochemical experiments employed an Autolab PGSTAT 30 potentiostat. The electrolyte was 1 M LiPF₆ in ethylene carbonate (EC)/dimethyl carbonate (DMC) (1:1, v:v). The reference and counter electrodes were from Li-metal.

### Results and discussion

Fig. 4 shows the Vis-NIR spectra of 6 x 10⁻⁴ M solution of Z-907Na complex and the working solution Z-907Na/SWCNT. In the latter case, we detected the characteristic features of carbon nanotubes. Semiconducting SWCNT are characterized by optical transitions between van Hove singularities at ca. 0.7 eV and 1.3 eV for the first and second pair of singularities, respectively. Metallic tubes manifest themselves by a transition at 1.8 - 1.9 eV, which corresponds to the first pair of Van Hove singularities. The main peak of Z-907Na occurs at ca. 2.35 eV, and it is blue shifted by ca. 50 meV in the SWCNT-containing solution (Fig. 4). Obviously, the Z-907Na complex acts as an efficient surfactant for SWCNT, due to the presence ofhydrophobic aliphatic C₉ chains (Scheme 1), which interact with the carbon tube surface. There are many other molecules reported for solubilization of SWCNT, the most popular being sodium dodecyl sulfate ^{[17]}, but, to the best of our knowledge, the solubilization of SWCNT by Ru-bipyridine complexes is here demonstrated for the first time.

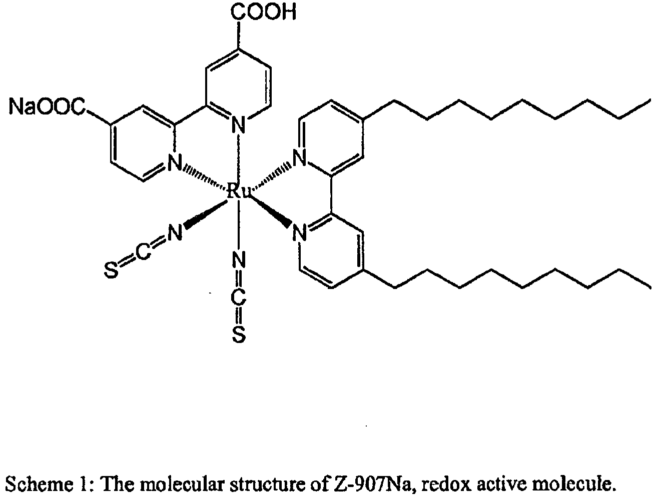

Fig. 5 (left chart) shows the cyclic voltammogram of a pure (carbon free) LiFePO₄ (bonded with 5% PVDF), which was treated by dip-coating into 6 x 10⁻⁴ mol/L solution of Z-907Na for 3 hours, rinsed with AN/t-BuOH and dried in vacuum at room temperature. The right chart plots analogous data for pure LiFePO₄ electrode, which was treated with Z-907Na/SWCNT solution in the same way. We see a plateau anodic current, which indicates the so-called "molecular wiring" of LiFePO₄ ^{[18]}. The Z-907Na complex (as in Scheme 1, can transport electronic charge via surface percolation in adsorbed monolayer even on insulating surfaces like Al₂O₃ ^{[19]}. Here, the NCS groups act as mediators for the surface-confined hole percolation, and the bipyridine ligands transport electrons. The hole diffusion coefficient within adsorbed Z-907Na was of the order of 10⁻⁹ cm²/s above the charge percolation threshold, ca. 50% of surface coverage ^{[19]}.

The effect of molecular wiring was recently applied to the LiFePO₄ electrode material, which can be wired by 4-(bis(4-methoxyphenyl)amino)benzylphosphonic acid ^{[20]}. In this case, the cross-surface hole percolation was followed by interfacial charging and discharging of LiFePO₄ with Li⁺ ions ^{[20]}. Our data confirm that the hole-transport wiring is possible also with the Z-907Na complex, while a similar anodic current (exceeding 0.2 mA/cm²) can be wired to the LiFePO₄ electrode at 0.1 V/s. The formal redox potential of Z-907Na adsorbed on inert TiO₂ surface was about 3.5 V vs. Li/Li^{+ [19,21]}, which is just sufficient for the anodic wiring of LiFePO₄ (redox potential 3.45 V vs. Li/Li⁺) but not for cathodic wiring ^{[20]}. Our data on Fig. 5 also confirm that the COOH/COONa are suitable anchoring groups for LiFePO₄, similar to the phosphonic acid anchoring group employed previously ^{[20]}. The total anodic charge was between 2 to 4 mC (0.4 to 0.7 mAh/g) for the electrode in Fig. 5 (left chart) at the given scan rates. This charge was not much larger at slower scanning and moreover, the electrode was unstable during repeated cycling at slower scan rates. The molecular wiring via adsorbed Z-907Na is sensitive to imperfections in the surface layer, which hamper the hole percolation.

Fig. 5 (right chart) shows a variant of the previous experiment, where the LiFePO₄ film was treated by dip-coating into Z-907Na/SWCNT solution. Surprisingly, the anodic current is now considerably smaller, which may be due to poor accessibility of the pores in the pre-deposited LiFePO₄ layer for SWCNT. As the carbon tubes are typically 1-10 µm long, they cannot easily interpenetrate the compact porous solid. Hence, the Z-907Na/SWCNT assemblies reside prevailingly on top of the LiFePO₄ layer. We may assume that either some free complex (Z-907Na) may still be present in our working solution Z-907Na/SWCNT or may be partly released from the SWCNT upon interaction with the LiFePO₄ surface. This causes poor surface coverage and attenuated molecular wiring in this case.

However, this situation changes dramatically, if the surface derivatization is carried out with the starting LiFePO₄ powder instead of the doctor-bladed porous film. Fig. 6 (left chart) shows cyclic voltammogram of this electrode compared to the voltammograms of an electrode, which was fabricated in the same way, but instead of using Z-907Na complex as a surfactant, the SWCNT were solubilized by pyrene butanoic acid. Obviously, this electrode shows practically no activity, indicating that the sole carbon nanotubes do not promote the charging/discharging of LiFePO₄. Also the electrode from carbon-coated LiFePO₄ (Nanomyte BE-20, NEI) shows much smaller activity compared to our Z-907Na/SWCNT electrode at the same conditions. A comparative experiment with Z-907Na/SWCNT treated LiMnPO₄ powder also showed practically no electrochemical activity (data not shown). The charging/discharging of LiFePO₄ via the surface attached Z-907Na/SWCNT assemblies was reasonably reversible, providing at 0.1 mV/s scan rate the specific capacity of ca. 41 mAh/h for anodic process and 40 mAh/g for cathodic process (see data on Fig. 6). The electrode was also quite stable, showing no obvious capacity fading in repeated voltammetric scans.

The exceptional properties of our Z-907Na/S WCNT electrode are further demonstrated by galvanostatic charging/discharging cycle. Fig. 6 (right chart) demonstrates that the Z-907Na/SWCNT electrode delivered at the charge rate C/5 and cut-off potentials 4 and 2.7 V vs. Li/Li⁺ the anodic charge of 390 mC (51 mAh/g) and the cathodic charge of 337 mC (44 mAh/g). A comparative test with carbon-coated LiFePO₄ (Nanomyte BE-20, NEI) cannot be carried out due to negligible activity of this electrode at the C/5 rate. Even at ten times slower charging, this carbon-coated electrode exhibits much worse performance (curve B in Fig 6, right chart).

The applied amount of working solution Z-907Na/SWCNT (1.5 mL; 6 x 10⁴ mol/L Z-907Na) gives the upper limit of the adsorbed Z-907Na to be 0.9 µmol and the amount of adsorbed carbon (in the form of SWCNT) to be 6.3 µmol per 200 mg of LiFePO₄ (See Experimental Section). The concentration of elemental carbon from SWCNT was, therefore, less than 0.04 wt% in the final solid material). From the BET surface area of LiFePO₄ we can calculate that the surface coverage of Z-907Na is equivalent to about one molecule per 2 nm². This is not far from the monolayer coverage, if we take into account the usual dimensions of Ru-bipyridine molecules ^{[22]}.

The unprecedented activity of the electrode composite of LiFePO₄ /Z-907Na/SWCNT is obviously due to the presence of carbon nanotubes, which can quickly transport the charge mediated by Z-907Na complex towards the olivine surface. This beneficial role of carbon nanotubes even promotes the cathodic process. This is almost absent in sole molecular wiring, due to low driving force of the redox process in Z-907Na for the reduction of Li₁ₓFePO₄ back to the starting stoichiometric composition (Fig. 5).

### Reference List nanotube wiring

[1] A. K. Padhi, K. S. Nanjundasawamy, J. B. Goodenough, J.Electrochem.Soc. 1997, 144, 1188-1194.
[2] C. Delacourt, L. Laffont, R. Bouchet, C. Wurm, J. B. Leriche, M. Mocrette, J. M. Tarascon, C. Masquelier, J.Electrochem.Soc. 2005,153, A913-A921.
[3] P. S. Herle, B. Ellis, N. Coombs, L. F. Nazar, Nature Mat. 2004, 3, 147-152.
[4] M. Yonemura, A. Yamada, Y. Takei, N. Sonoyama, R. Kanno, J.Electrochem.Soc. 2004, 151, A1352-A1356.
[5] F. Zhou, K. Kang, T. Maxisch, G. Ceder, D. Morgan, Solid State Comm. 2004, 132, 181-186.
[6] B. Ellis, L. K. Perry, D. H. Ryan, L. F. Nazar, J.Am.Chem.Soc. 2006, 128.
[7] R. Dominko, M. Bele, M. Gaberseck, M. Remskar, D. Hanzel, J. M. Goupil, S. Pejovnik, J. Jamnik, J.Power Sources 2006, 153, 274-280.
[8] T. Nakamura, Y. Miwa, M. Tabuchi, Y. Yamada, J.Electrochem.Soc. 2006, 153, A1108-A1114.
[9] J. Ma, Z. Qin, J.Power Sources 2005, 148, 66-71.
[10] N. H. Kwon, T. Drezen, I. Exnar, I. Teerlinck, M. Isono, M. Grätzel, Electrochem.Solid State Lett. 2006, 9, A277-A280.
[11] A. Yamada, M. Hosoya, S. C. Chung, Y. Kudo, K. Hinokuma, K. Y. Liu, Y. Nishi, J.Power Sources 2003, 119-121, 232-238.
[12] G. Li, H. Azuma, M. Tohda, Electrochem.Solid State Lett. 2002, 5, A135-A137.
[13] C. Delacourt, P. Poizot, M. Morcrette, J. M. Tarascon, C. Masquelier, Chem.Mater. 2004, 16, 93-99.
[14] S. Y. Chung, J. T. Bloking, Y. M. Chiang, Nature Mat. 2002, 1, 123-128.
[15] D. Wang, H. Li, Z. Whang, X. Wu, Y. Sun, X. Huang, L. Chen, J. Solid State Chem. 2004, 177, 4582-4587.
[16] P. Wang, B. Wenger, R. Humphry-Baker, J. Moser, J. Teuscher, W. Kantlehner, J. Mezger, E. V. Stoyanov, S. M. Zakeeruddin, M. Grätzel, J.Am.Chem.Soc. 2005, 127, 6850-6856.
[17] D. A. Britz, A. N. Khlobystov, Chem.Soc.Rev. 2006, 35, 637-659.
[18] S. W. Boettcher, M. H. Bartl, J. G. Hu, G. D. Stucky, J.Am.Chem.Soc. 2005, 127, 9721-9730.
[19] Q. Wang, S. M. Zakeeruddin, M. K. Nazeeruddin, R. Humphry-Baker, M. Grätzel, J.Am.Chem.Soc. 2006, 128, 4446-4452.
[20] Q. Wang, N. Evans, S. M. Zekeeruddin, I. Exnar, M. Grätzel, J. Am. Chem. Soc,. 2006.
[21] P. Wang, S. M. Zakeeruddin, P. Comte, R. Charvet, R. Humphry-Baker, M. Grätzel, J.Phys.Chem.B 2003, 107, 14336-14341.
[22] M. K. Nazeeruddin, P. Pechy, T. Renouard, S. M. Zakeeruddin, R. Humphry-Baker, P. Comte, P. Liska, L. Cevey, E. Costa, V. Shklover, L. Spiccia, G. B. Deacon, C. A. Bignozzi, M. Grätzel, J.Am.Chem.Soc. 2001, 123, 1613-1624.

## Claims

1. A rechargeable electrochemical cell with improved energy density comprising cathodic or anodic lithium insertion materials with p- and n-type redox active compounds, said electrochemical cell comprising two compartments separated by a separating element, the first compartment containing said cathodic lithium insertion material and said p- type redox active compounds in an electrolyte, the second compartment containing said anodic lithium insertion material and said n-type redox active compounds in an electrolyte, and wherein the said p- and n-type redox active compounds are polymer compounds, or are attached to single-walled carbon nanotubes, and are insoluble in the electrolyte.

2. A rechargeable electrochemical cell according to claim 1 wherein:
(a) The first oxidation potential of the p-type redox active compound matches at least the cathodic lithium insertion material, the cathodic electrode comprising cathodic lithium insertion material, binder, conductive additives.
(b) The first reduction potential of the n-type redox active compound matches at least the anodic lithium insertion material, the anodic electrode comprising anodic lithium insertion material, binder, conductive additives.

3. A rechargeable electrochemical cell according to claim 2, wherein the nano- or sub- micrometer sized cathodic lithium insertion material is selected from doped or non- doped oxides LiMO₂ where M is one or more elements selected from M = Co, Ni, Mn, Fe, W, V, LiV₃O₈ and mix of them; phosphor-olivines such as LiMPO₄ where M is one or more elements selected from M = Fe, Co, Mn, Ni, VO, Cr and mix of them and spinels and mixed spinels such as LiₓMn₂O₄ or Li₂CoₓFe_{y}Mn_{z}O₈,.

4. A rechargeable electrochemical cell according to claim 2, wherein the nano- or sub- micrometer sized anodic lithium insertion material is selected from carbon, TiO₂ Li₄Ti₅O₁₂, SnO₂, SnO, Si.

5. A rechargeable electrochemical cell according to claim 2, wherein the particle size of the lithium insertion materials ranges from 10nm to 10µm.

6. A rechargeable electrochemical cell according to claim 1 wherein said polymer is a composition of a redox active molecule attached to the polymer backbone, either by covalent bonding or quartemization

7. A rechargeable electrochemical cell according to claim 1 wherein said polymer is also acting as a binder.

8. The rechargeable electrochemical cell according to claim 1, wherein the polymer is selected from polyvinyl pyridine, polyvinyl imidazole, polyethylene oxide, polymethylmethacrylate, polyacrylonitrile, polypropylene, polystyrene, polybutadiene, polyethyleneglycol, polyvinylpyrrolidone, polyaniline, polypyrrole, polythiophene and their derivatives.

9. The rechargeable electrochemical cell according to claim 1 wherein the redox active polymer is Poly(4-(-(10-(12'-dodecyl phenoxazine)pyridinium)-co-4-vinylpyridine.

10. A rechargeable electrochemical cell according to any one of claims 1 to 5 wherein p- or n-type redox active compounds are attached to a single-walled carbon nanotube (SWCNT).

11. A rechargeable electrochemical cell according to claim 10 wherein the redox active compounds are attached to the SWCNT either by covalent bonding, non-covalent bonding or electrostatic interaction.

12. A rechargeable electrochemical cell according to claim 1 wherein the redox active compounds are an organic compound selected from equation (1)
D-⁅Π⁆(̵Ral)_{q}- (1)
wherein ⁅II⁆ represents schematically the π system of the aforesaid compound, Ra1 represents an aliphatic substituent with a saturated chain portion bound to the π system, and wherein q represents an integer, indicating that ⁅II⁆ may bear more than one substituent Ra1
The π system ⁅Π⁆ may be an unsaturated chain of conjugated double or triple bonds of the type 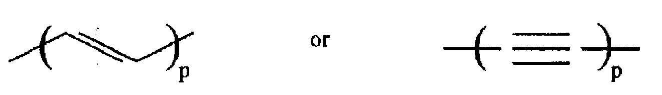 wherein p is an integer from 0 to 20 or an aromatic group Rar of from 6 to 22 carbon atoms, or a combination thereof,
wherein p is an integer from 0 to 4,
wherein q is an integer from 0 to 4,
wherein Rar is a monocyclic or oligocyclic aryl from C6 to C22,
wherein -Ra1 is H, -R1, (-O-R1)ₙ, -N(R1)₂, -NHR1, 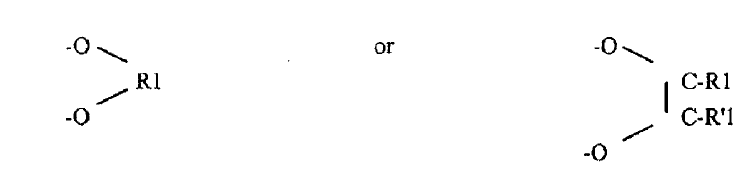 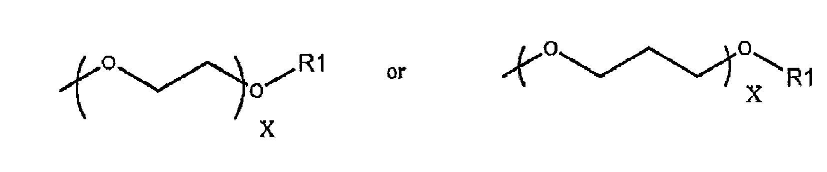 or 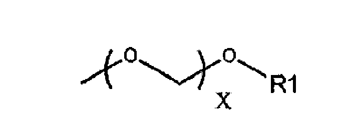 wherein R1, R'1 is an alkyl from 1 to 10 carbon atoms, x ≥ 0,and 0 < n < 5.
D is selected from structures of formula (1-11) given below: 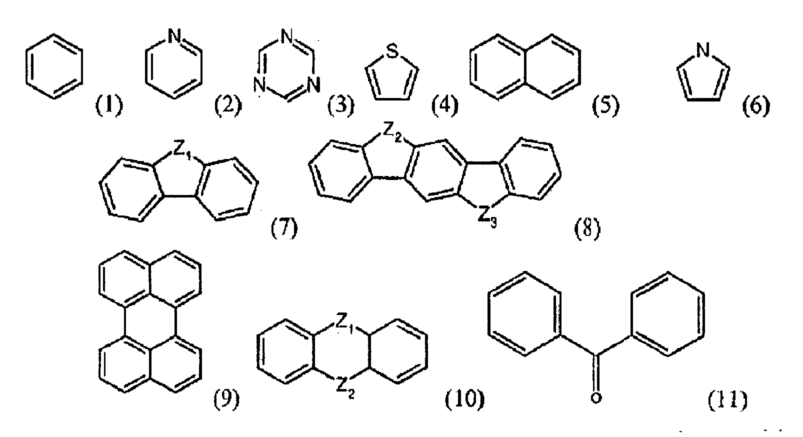 in which each of Z₁, Z₂ and Z₃ is the same or different and is selected from the group consisting of O, S, SO, SO₂, NR¹, N⁺(R^{1'})(R^{1"}), C(R²)(R³), Si(R^{2'})(R^{3'}) and P(O)(OR⁴), wherein R¹, R^{1'} and R^{1"} are the same or different and each is selected from the group consisting of hydrogen atoms, alkyl groups, haloalkyl groups, alkoxy groups, alkoxyalkyl groups, aryl groups, aryloxy groups, and aralkyl groups, which are substituted with at least one group of formula -N⁺(R⁵)₃ wherein each group R⁵ is the same or different and is selected from the group consisting of hydrogen atoms, alkyl groups and aryl groups, R², R³, R^{2'} and R^{3'} are the same or different and each is selected from the group consisting of hydrogen atoms, alkyl groups, haloalkyl groups, alkoxy groups, halogen atoms, nitro groups, cyano groups, alkoxyalkyl groups, aryl groups, aryloxy groups and aralkyl groups or R² and R³ together with the carbon atom to which they are attached represent a carbonyl group, and R⁴ is selected from the group consisting of hydrogen atoms, alkyl groups, haloalkyl groups, alkoxyalkyl groups, aryl groups, aryloxy groups and aralkyl groups.

13. A rechargeable electrochemical cell according to claim 12 wherein structure (10) for D is selected from structures (12) and (13) given below:

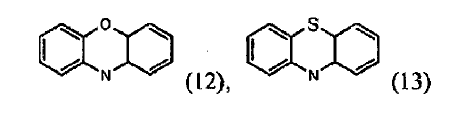

14. A rechargeable electrochemical cell according to claim 1 wherein the redox active compound is a metal complex selected from formula (5) to (8)
Me L1 L(Z)₂ (5)
Me L2 L Z (6)
Me L1 (L2)(L3) (7)
Me (L1)(L2) (8)
The resulting metal complex is an organometallic complex of a metal Me selected from the group of Ru, Os and Fe comprising, as a ligand, a compound L, L1, L2, L3, and Z , said complex
being of formula (5) if L and L1 are the same or different and are selected from a compound of formulas (15), (16), (18), (20), (21), (22), (23),(24), (25), (26), (27) or (28).
being of formula (6) if L is selected from a compound of formula (15), (16), (18), (20), (21), (22), (23), (24),(25), (26), (27) or (28) and L2 is selected from a compound of formula (17) or (19), wherein Z is selected from the group consisting of H₂O, Cl, Br, CN, NCO, NCS and NCSe.
being of formula (7), wherein L1, L2 and L3 are the same or different and are selected from a compound of formula (14), (15), (16), (18), (20), (21), (22), (23),(24), (25), (26), (27) or (28)
being of formula (8), wherein L1 and L2 may be same or different, and at least one of substituents R, R', R" comprises a π system in conjugated relationship with the π system of the tridentate structure of formulae (17) and (19) 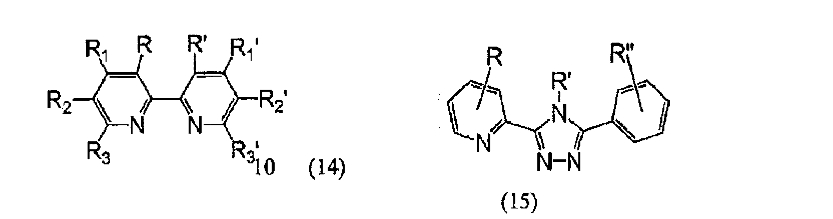 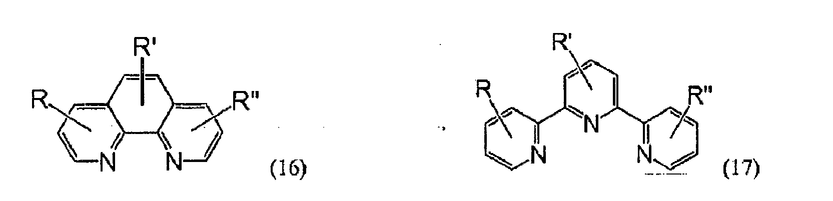 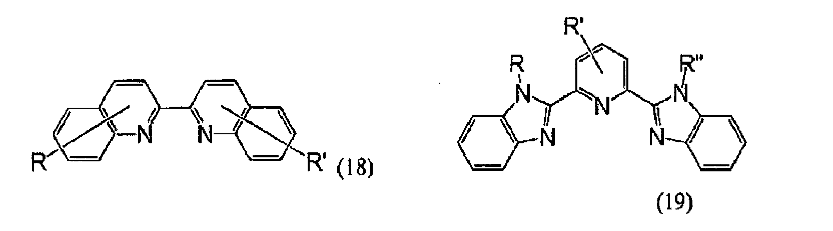 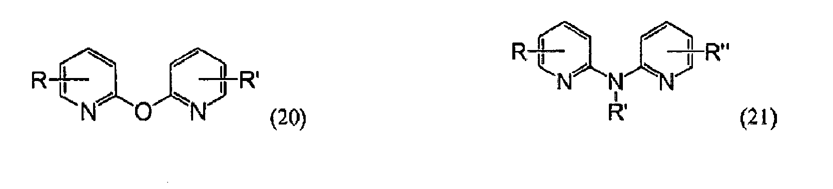 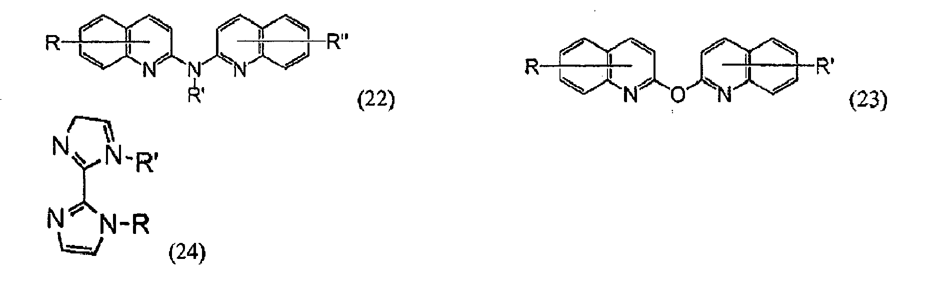 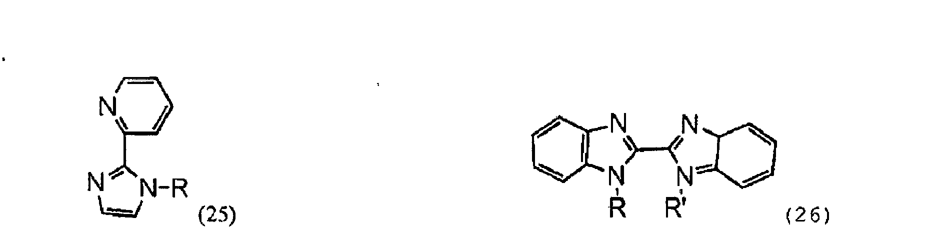 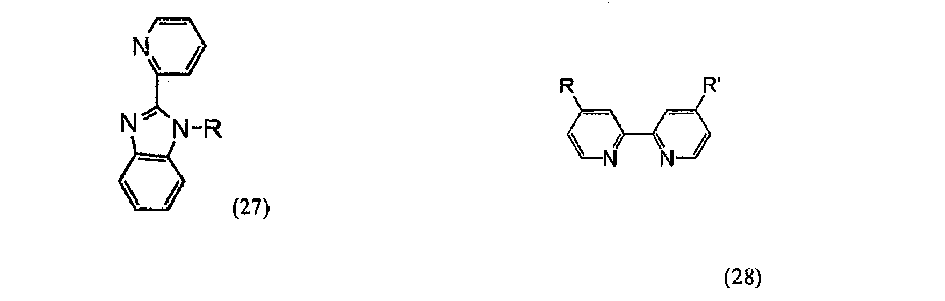 wherein at least one of the substituents -R, -R₁, -R₂, -R₃, -R', -R₁', -R₂', -R₃', -R" is of formula (2), (3) or (4) 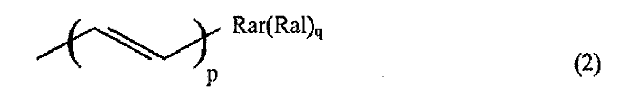 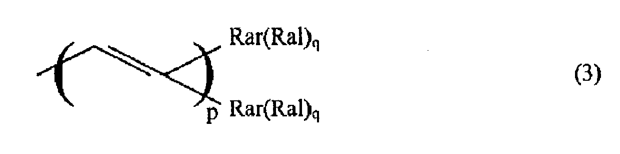 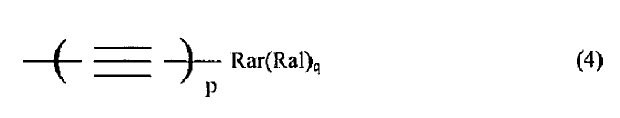 wherein p is an integer from 0 to 4,
wherein q is an integer from 0 to 4,
wherein Rar is a monocyclic or oligocyclic aryl from C6 to C22,
wherein -Ra1 is H, -Ra1, (-O-R1)ₙ, -N(R1)₂, -NHR1, 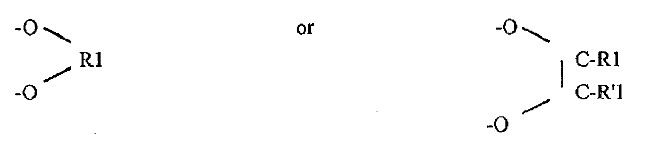 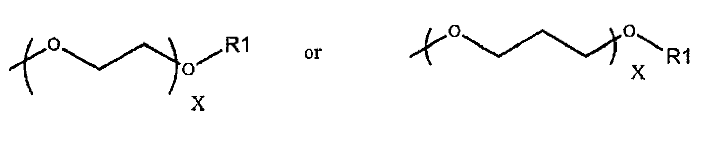 or 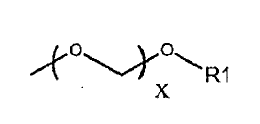 wherein R1, R'1 is an alkyl from 4 to 10 carbon atoms, x ≥ 0,and 0 < n < 5 and wherein the other one(s) of substituent(s) -R, -R₁, -R₂, -R₃, -R', -R₁', -R₂', -R₃', -R" is (are) the same or a different substituents of formula (1), (2) or (3), or is (are) selected from -H, -OH, -R₂, -OR₂ or -N(R₂)₂, wherein R₂ is an alkyl of 1 to 20 carbon atoms.

## Patentansprüche

1. Eine wiederaufladbare elektrochemische Zelle mit verbesserter Energiedichte, die kathodische oder anodische Lithiuminsertionsmaterialien mit redoxaktiven Verbindungen des p- und n-Typs beinhaltet, wobei die elektrochemische Zelle zwei durch ein Trennelement getrennte Kammern beinhaltet, wobei die erste Kammer das kathodische Lithiuminsertionsmaterial und die redoxaktiven Verbindungen des p-Typs in einem Elektrolyt enthält, die zweite Kammer das anodische Lithiuminsertionsmaterial und die redoxaktiven Verbindungen des n-Typs in einem Elektrolyt enthält und wobei die redoxaktiven Verbindungen des p- und n-Typs Polymerverbindungen sind oder an einwandigen Kohlenstoffnanoröhrchen angebracht sind und in dem Elektrolyt unlöslich sind.

2. Wiederaufladbare elektrochemische Zelle gemäß Anspruch 1, wobei:
(a) Das erste Oxidationspotenzial der redoxaktiven Verbindung des p-Typs mindestens zu dem kathodischen Lithiuminsertionsmaterial passt, wobei die kathodische Elektrode kathodisches Lithiuminsertionsmaterial, Bindemittel, leitende Zusatzstoffe beinhaltet.
(b) Das erste Reduktionspotenzial der redoxaktiven Verbindung des n-Typs mindestens zu dem anodischen Lithiuminsertionsmaterial passt, wobei die anodische Elektrode anodisches Lithiuminsertionsmaterial, Bindemittel, leitende Zusatzstoffe beinhaltet.

3. Wiederaufladbare elektrochemische Zelle gemäß Anspruch 2, wobei das kathodische Lithiuminsertionsmaterial mit einer Größe im Nano- oder Sub-Mikrometer-Bereich aus dotierten oder nicht dotierten Oxiden LiMO₂ ausgewählt ist, wobei M ein oder mehrere Elemente, ausgewählt aus M = Co, Ni, Mn, Fe, W, V, LiV₃O₈ und einer Mischung aus diesen, ist; Phosphor-Olivine wie etwa LiMPO₄, wobei M ein oder mehrere Elemente, ausgewählt aus M = Fe, Co, Mn, Ni, VO, Cr und einer Mischung aus diesen und Spinellen und gemischten Spinellen wie etwa LiₓMn₂O₄ oder Li₂CoₓF_{y}Mn_{z}O₈, ist.

4. Wiederaufladbare elektrochemische Zelle gemäß Anspruch 2, wobei das anodische Lithiuminsertionsmaterial mit einer Größe im Nano- oder Sub-Mikrometer-Bereich aus Kohlenstoff, TiO₂, Li₄Ti₅O₁₂, SnO₂, SnO, Si ausgewählt ist.

5. Wiederaufladbare elektrochemische Zelle gemäß Anspruch 2, wobei die Partikelgröße des Lithiuminsertionsmaterials im Bereich von 10 nm bis 10 µm liegt.

6. Wiederaufladbare elektrochemische Zelle gemäß Anspruch 1, wobei das Polymer eine Zusammensetzung eines redoxaktiven Moleküls ist, das entweder durch kovalente Bindung oder Quarternisierung an dem Polymerrückgrat angebracht ist.

7. Wiederaufladbare elektrochemische Zelle gemäß Anspruch 1, wobei das Pdymer auch als ein Bindemittel fungiert.

8. Wiederaufladbare elektrochemische Zelle gemäß Anspruch 1, wobei das Polymer aus Polyvinylpyridin, Polyvinylimidazol, Polyethylenoxid, Polymethylmethacrylat, Polyacrylonitril, Polypropylen, Polystyrol, Polybutadien, Polyethylen, Polyvinylpyrrolidon, Polyanilin, Polypyrrol, Polythiophen und deren Derivaten ausgewählt ist.

9. Wiederaufladbare elektrochemische Zelle gemäß Anspruch 1, wobei das redoxaktive Polymer Poly(4-(-(10-(12'-dodecyl-phenoxazin)pyridinium)co-4- vinylpyridin ist.

10. Wiederaufladbare elektrochemische Zelle gemäß einem der Ansprüche 1 bis 5, wobei redoxaktive Verbindungen des p- oder n-Typs an einem einwandigen Kohlenstoffnanoröhrchen (SWCNT) befestigt sind.

11. Wiederaufladbare elektrochemische Zelle gemäßAnspruch 10, wobei die redoxaktiven Verbindungen entweder durch kovalente Bindung, nicht kovalente Bindung oder elektrostatische Wechselwirkung an dem SWCNT angebracht sind.

12. Wiederaufladbare elektrochemische Zelle gemäß Anspruch 1, wobei die redoxaktiven Verbindungen eine organische Verbindung sind, ausgewählt aus der Gleichung (1)
D⁅Π⁆(̵Ral)_{q}- (1)
wobei ⁅Π⁆ schematisch das π-System der vorbenannten Verbindung darstellt, Ra1 einen aliphatischen Substituenten mit einem gesättigten Kettenabschnitt, gebunden an das π-System, darstellt, und wobei q eine ganze Zahl darstellt, die angibt, dass
⁅Π⁆ mehr als einen Substituenten Ra1 tragen kann.
Das π-System ⁅Π⁆ kann eine ungesättigte Kette konjugierter Doppel oder Dreifachbindungen der folgenden Art sein kann 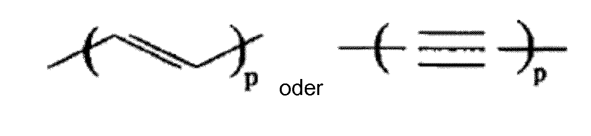 wobei p eine ganze Zahl von 0 bis 20 oder eine aromatische Gruppe Rar von 6 bis 22 Kohlenstoffatomen oder eine Kombination daraus ist,
wobei p eine ganze Zahl von 0 bis 4 ist,
wobei q eine ganze Zahl von 0 bis 4 ist,
wobei Rar ein monozyklisches oder oligozyklisches Aryl von C6 bis C22 ist,
wobei -Ra1 H, -R1, (-O-R1)_{n,} -N(R1)₂, -NHR1 ist 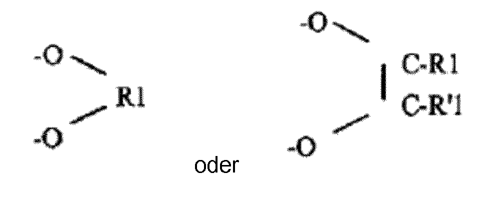 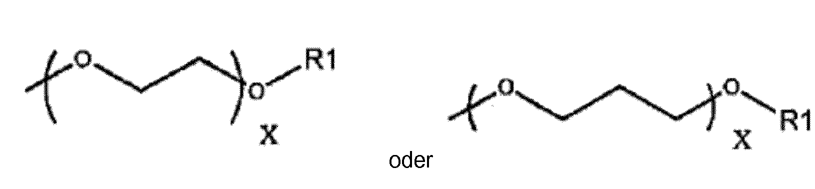 oder 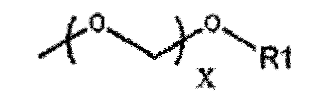 wobei R1, R'1 ein Alkyl von 1 bis 10 Kohlenstoffatomen, x ≥ 0 und 0 < n < 5 ist. D ist aus Strukturen der unten angegebenen Formel (1-11) ausgewählt: 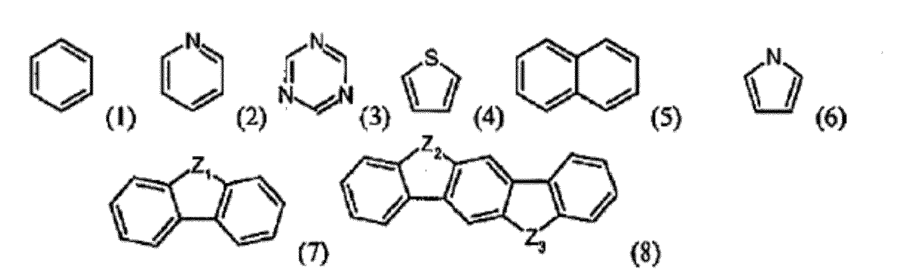 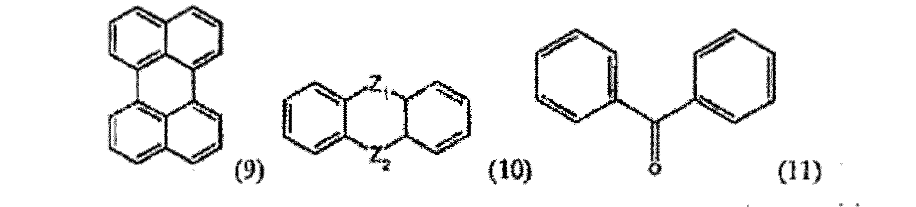 in denen jedes von Z₁, Z₂ und Z₃ gleich oder verschieden ist und aus der Gruppe ausgewählt ist, die aus O, S, SO, SO₂, NR^{Nr.1}, N⁺(R¹)(R¹), C(R²)(R³), Si(R^{2'})(R^{3'}) und P(O)(OR⁴), wobei R¹, R^{1'} und R^{1"} gleich oder verschieden sind und jedes aus der Gruppe ausgewählt ist, die aus Wasserstoffatomen, Alkylgruppen, Haloalkylgruppen, Alkoxygruppen, Alkoxyalkylgruppen, Arylgruppen, Aryloxygruppen und Aralkylgruppen, die mit mindestens einer Gruppe der Formel-N⁺(R⁵)₃ substituiert sind, besteht, wobei jede Gruppe R⁵ gleich oder verschieden ist und aus der Gruppe ausgewählt ist, die aus Wasserstoffatomen, Alkylgruppen und Arylgruppen besteht, R², R³, R^{2'} und R^{3'} gleich oder verschieden sind und jedes aus der Gruppe ausgewählt ist, die aus Wasserstoffatomen, Alkylgruppen, Haloalkylgruppen, Alkoxygruppen, Halogenatomen, Nitrogruppen, Cyangruppen, Alkoxyalkylgruppen, Arylgruppen, Aryloxygruppen und Aralkylgruppen besteht oder R² und R³ zusammen mit dem Kohlenstoffatom, an dem sie angebracht sind, eine Carbonylgruppe darstellen, und R⁴ aus der Gruppe ausgewählt ist, die aus Wasserstoffatomen, Alkylgruppen, Haloalkylgruppen, Alkoxyalkylgruppen, Arylgruppen, Aryloxygruppen und Aralkylgruppen besteht.

13. Wiederaufladbare elektrochemische Zelle gemäß Anspruch 12, wobei die Struktur (10) für D aus den unten angegebenen Strukturen (12) und (13) ausgewählt ist:

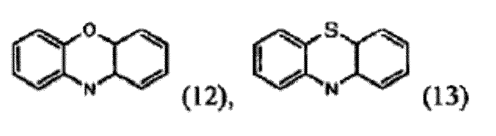

14. Wiederaufladbare elektrochemische Zelle gemäß Anspruch 1, wobeidie redoxaktive Verbindung ein aus den Formeln (5) bis (8) ausgewählter Metallkomplex ist
Me L1 L(Z)₂ (5)
Me L2 L Z (6)
Me L1 (L2)(L3) (7)
Me (L1)(L2) (8)
Der resultierende Metallkomplex ist ein organometallischer Komplex eines Metalls Me, ausgewählt aus der Gruppe von Ru, Os und Fe, der, als einen Ligand, eine Verbindung L, L1, L2, L3 und Z beinhaltet, wobei der Komplex
von der Formel (5) ist, wenn L und L1 gleich oder verschieden sind und aus einer Verbindung der Formeln (15), (16), (18), (20), (21), (22), (23),(24), (25), (26), (27) oder (28) ausgewählt sind.
von der Formel (6) ist, wenn L aus einer Verbindung der Formeln (15), (16), (18), (20), (21), (22), (23), (24), (23), (25), (26), (27) oder (28)ausgewählt ist und L2 aus einer Verbindung der Formel (17) oder (19)ausgewählt ist, wobei Z aus der Gruppe ausgewählt ist, die aus H₂O, Cl, Br., CN, NCO, NCS und NCSe besteht.
von der Formel (7) ist, wobei L1, L2 und L3 gleich oder verschiedensind und aus einer Verbindung der Formeln (14), (15), (16), (18), (20), (21), (22), (23), (24), (25), (26), (27) oder (28) ausgewählt sind.
von der Formel (8) ist, wobei L1 und L2 gleich oder verschieden sein können, und mindestens einer der Substituenten R, R', R" ein π-System in konjugiertem Verhältnis mit dem π-System der drei zahnigen Struktur der Formeln (17) und (19) beinhaltet. 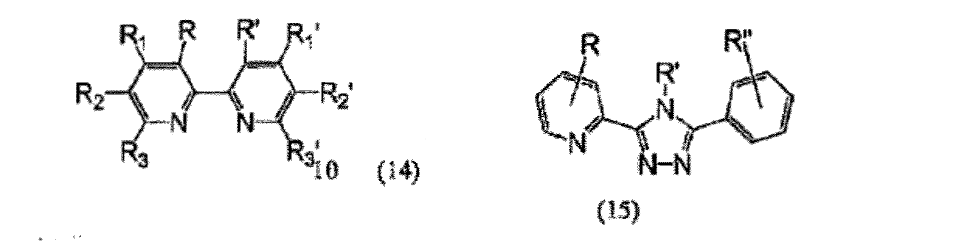 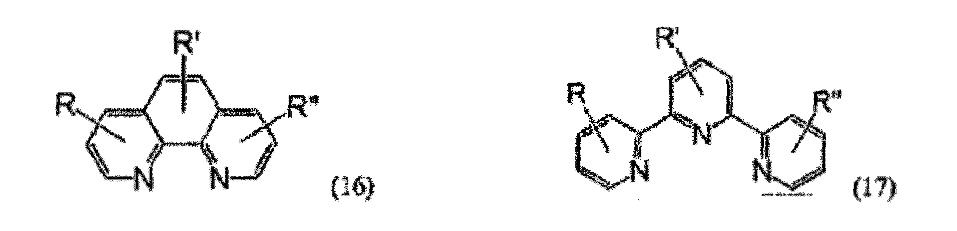 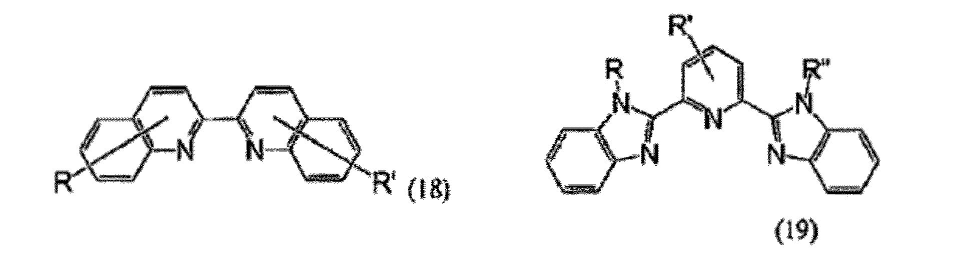 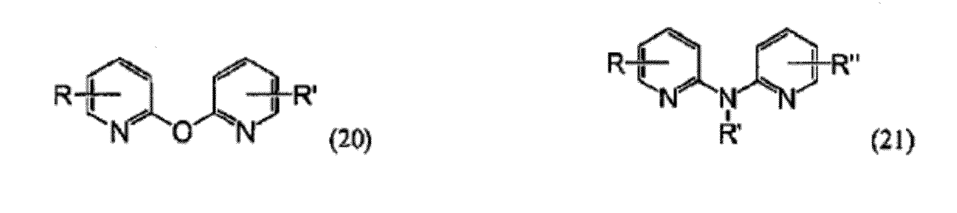 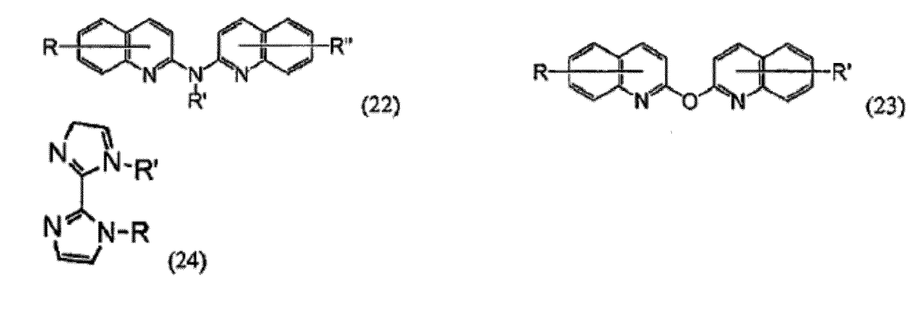 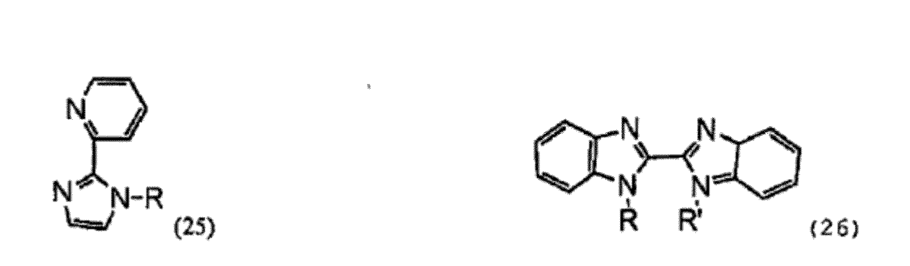 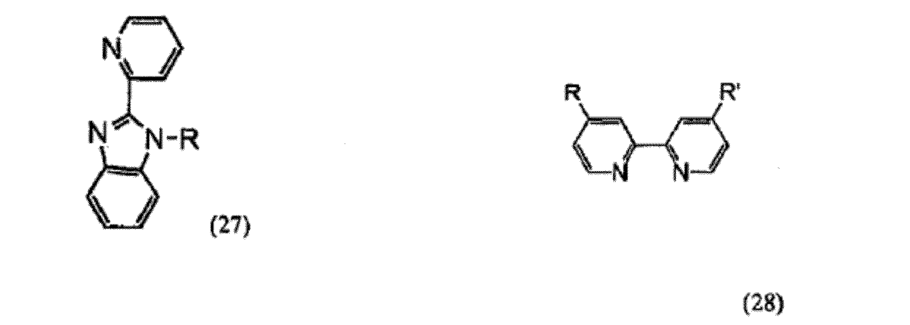 wobei mindestens einer der Substituenten-R, -R₁, -R₂, -R₃, -R', -R₁', -R₂', -R₃', -R" von den Formeln (2), (3) oder (4) ist 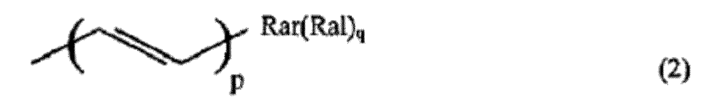 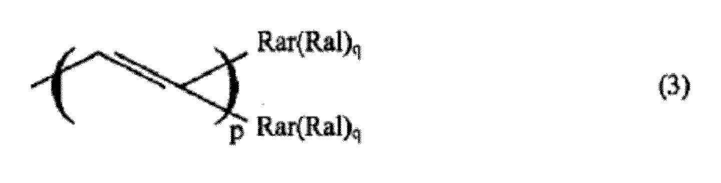 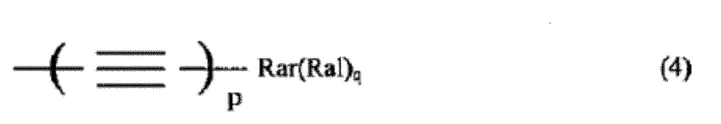 wobei p eine ganze Zahl von 0 bis 4 ist,
wobei q eine ganze Zahl von 0 bis 4 ist,
wobei Rar ein monozyklisches oder oligozyklisches Aryl von C6bis C22 ist, wobei -Ra1 H, -R1, (-O-R1)ₙ, -N(R1)₂, -NHR1 ist, 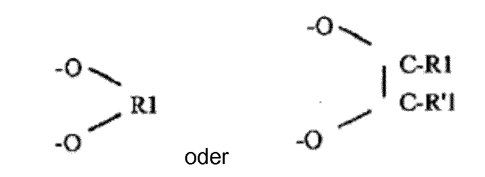 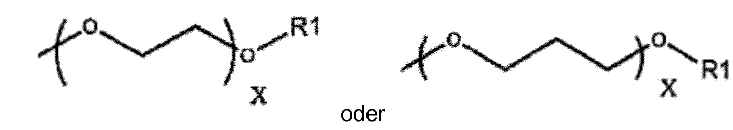 oder 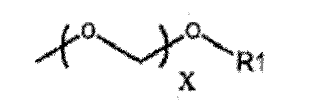 wobei R1, R'1 ein Alkyl von 4 bis 10 Kohlenstoffatomen, x ≥ 0 und 0 < n < 5, ist und wobei der/die andere(n) Substituent(en)-R, -R₁, -R₂, -R₃, -R', -R₁', -R₂', -R₃', -R" gleich oder verschiedene Substituenten der Formel (1), (2) oder (3) ist/sind, oder aus-H, -OH, -R₂, -OR₂ oder -N(R₂)₂ ausgewählt ist/sind, wobei R₂ ein Alkyl von 1 bis 20 Kohlenstoffatomen ist.

## Revendications

1. Une cellule électrochimique rechargeable à densité d'énergie améliorée comprenant des matériaux d'insertion du lithium cathodiques ou anodiques avec des composés redox actifs de type p et n, ladite cellule électrochimique comprenant deux compartiments séparés par un élément de séparation, le premier compartiment contenant ledit matériau d'insertion du lithium cathodique et lesdits composés redox actifs de type p dans un électrolyte, le deuxième compartiment contenant ledit matériau d'insertion du lithium anodique et lesdits composés redox actifs de type n dans un électrolyte, et dans laquelle lesdits composés redox actifs de type p et n sont des composés polymères, ou sont attachés à des nanotubes de carbone monoparoi, et sont insolubles dans l'électrolyte.

2. Une cellule électrochimique rechargeable selon la revendication 1 dans laquelle :
(a) Le premier potentiel d'oxydation du composé redox actif de type p équivaut au moins au matériau d'insertion du lithium cathodique, l'électrode cathodique comprenant un matériau d'insertion du lithium cathodique, un liant, des additifs conducteurs.
(b) Le premier potentiel de réduction du composé redox actif de type n équivaut au moins au matériau d'insertion du lithium anodique, l'électrode anodique comprenant un matériau d'insertion du lithium anodique, un liant, des additifs conducteurs.

3. Une cellule électrochimique rechargeable selon la revendication 2, dans laquelle le matériau d'insertion du lithium cathodique de taille nano- ou sub-micrométrique est sélectionné parmi des oxydes dopés ou non dopés LiMO₂ où M est un ou plusieurs éléments sélectionnés parmi M = Co, Ni, Mn, Fe, W, V, LiV₃O₈ et un mélange de ceux-ci ; des olivines au phosphore telles que LiMPO₄ où M est un ou plusieurs éléments sélectionnés parmi M = Fe, Co, Mn, Ni, VO, Cr et un mélange de ceux-ci et des spinelles et spinelles mélangés tels que LiₓMn₂O₄ ou Li₂CoₓFe_{y}Mn_{z}O₈.

4. Une cellule électrochimique rechargeable selon la revendication 2, dans laquelle le matériau d'insertion du lithium anodique de taille nano- ou sub-micrométrique est sélectionné parmi le carbone, TiO₂, Li₄Ti₅O₁₂, SnO₂, SnO, Si.

5. Une cellule électrochimique rechargeable selon la revendication 2, dans laquelle la taille de particule des matériaux d'insertion du lithium est comprise dans la gamme allant de 10 nm à 10 µm.

6. Une cellule électrochimique rechargeable selon la revendication 1 dans laquelle ledit polymère est une composition dune molécule redox active attachée au squelette polymérique, soit par liaison covalente, soit par quaternisation.

7. Une cellule électrochimique rechargeable selon la revendication 1 dans laquelle ledit polymère fait également office de liant.

8. La cellule électrochimique rechargeable selon la revendication 1, dans laquelle le polymère est sélectionné parmi la polyvinyl pyridine, b polyvinyl imidazole, l'oxyde de polyéthylène, le polyméthylméthacrylate, le polyacrylonitrile, le polypropylène, le polystyrène, le polybutadiène, le polyéthylèneglycol, la polyvinylpyrrolidone, la polyaniline, le polypyrrole, le polythiophène et leurs dérivés.

9. La cellule électrochimique rechargeable selon la revendication 1 dans laquelle le polymère redox actif est la poly(4-(-(10-(12'-dodécyl phénoxazine)pyridinium)co-4-vinylpyridine.

10. Une cellule électrochimique rechargeable selon l'une quelconque des revendications 1 à 5 dans laquelle les composés redox actifs de type p ou n sont attachés à un nanotube de carbone monoparoi (SWCNT).

11. Une cellule électrochimique rechargeable selon la revendication 10 dans laquelle les composés redox actifs sont attachés au SWCNT soit par liaison covalente, soit par liaison non covalente, soit par interaction électrostatique.

12. Une cellule électrochimique rechargeable selon la revendication 1 dans laquelle les composés redox actifs sont un composé organique sélectionné dans l'équation (1)
D⁅II⁆(̵Ral)_{q}- (1)
où ⁅Π⁆ représente de façon schématique le système π du composé susmentionné, Ra1 représente un substituant aliphatique avec une portion de chaîne saturée liée au système π, et où q représente un entier, indiquant que ⁅Π⁆ peut porter plus d'un substituant Ra1
le système π ⁅Π⁆ peut être une chaîne insaturée de liaisons doubles ou triples conjuguées du type 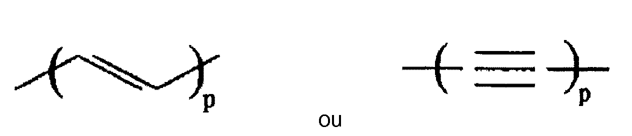 où p est un entier allant de 0 à 20 ou un groupe aromatique Rar ayant de 6 à 22 atomes de carbone, ou une combinaison de ceux-ci,
où p est un entier allant de 0 à 4,
où q est un entier allant de 0 à 4,
où Rar est un aryle monocyclique ou oligocyclique allant de C6 à C22,
où -Ra1 est H, -R1, (-O-R1)ₙ, -N(R1)₂, -NHR1, 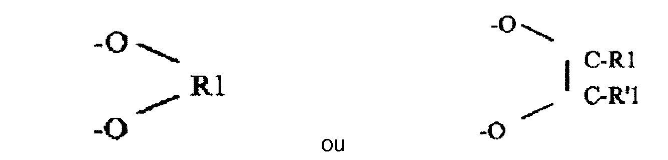 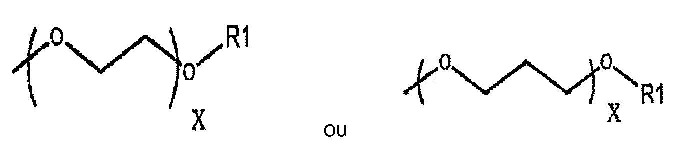 ou 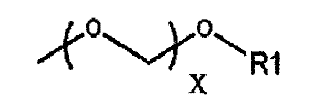 où R1, R'1 est un alkyle allant de 1 à 10 atomes de carbone, x ≥ 0, et 0 < n < 5. D est sélectionné parmi les structures de formule (1-11) données ci-dessous : 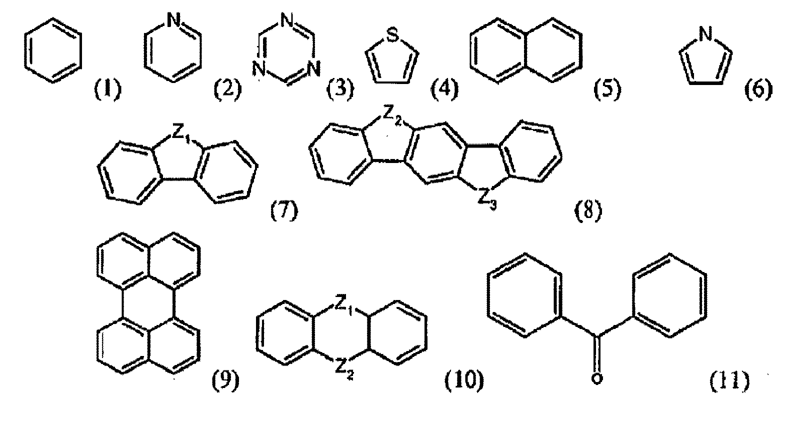 dans lesquelles chaque élément parmi Z₁, Z₂ et Z₃ est identique ou différent et est sélectionné dans le groupe consistant en O, S, SO, SO₂, NR¹, N⁺(R^{1'-})(R^{1"}), C(R²)(R³), Si(R^{2'})(R^{3'}) et P(O)(OR⁴), où R¹, R^{1'} et R^{1"} sont identiques ou différents et chacun est sélectionné dans le groupe consistant en des atomes d'hydrogène, des groupes alkyle, des groupes haloalkyle, des groupes alcoxy, des groupes alcoxyalkyle, des groupes aryle, des groupes aryloxy, et des groupes aralkyle, lesquels sont substitués avec au moins un groupe de formule -N⁺(R⁵)₃ où chaque groupe R⁵ est identique ou différent et est sélectionné dans le groupe consistant en des atomes dhydrogène, des groupes alkyle et des groupes aryle, R², R³, R^{2'} et R³' sont identiques ou différents et chacun est sélectionné dans le groupe consistanten des atomes d'hydrogène, des groupes alkyle, des groupes haloalkyle, des groupes alcoxy, des atomes d'halogène, des groupes nitro, des groupes cyano, des groupes alcoxyalkyle, des groupes aryle, des groupes aryloxy, et des groupes aralkyle ou R² et R³ de pair avec l'atome de carbone auquel ils sont attachés représentent un groupe carbonyle, et R⁴ est sélectionné dans le groupe consistant en des atomes d'hydrogène, des groupes alkyle, des groupes haloalkyle, des groupes alcoxyalkyle, des groupes aryle, des groupes aryloxy et des groupes aralkyle.

13. Une cellule électrochimique rechargeable selon la revendication 12 dans laquelle la structure (10) pour D est sélectionnée parmi les structures (12) et (13) données ci-dessous :

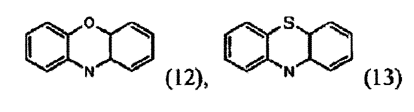

14. Une cellule électrochimique rechargeable selon la revendication 1 dans laquelle le composé redox actif est un complexe métallique sélectionné parmi les formules (5) à (8)
Me L1 L(Z)₂ (5)
Me L2 L Z (6)
Me L1 (L2)(L3) (7)
Me (L1)(L2) (8)
le complexe métallique résultantest un complexe organométallique d'un métal Me sélectionné dans le groupe de Ru, Os et Fe comprenant, en tant que ligand, un composé L, L1, L2, L3, et Z, ledit complexe
étant de la formule (5) si L et L1 sont identiques à ou différents et sont sélectionnés parmi un composé des formules (15), (16), (18), (20), (21), (22), (23), (24), (25), (26), (27) ou (28)
étant de la formule (6) si L est sélectionné parmi un composé de la formule (15), (16), (18), (20), (21), (22), (23), (24), (25), (26), (27) ou (28) et L2 est sélectionné parmi un composé de la formule (17) ou (19), où Z est sélectionné dans le groupe consistant en H₂O, Cl, Br, CN, NCO, NCS et NCSe
étant de la formule (7), où L1, L2 et L3 sont identiques à ou différents et sont sélectionnés parmi un composé de la formule (14), (15), (16), (18), (20), (21), (22), (23), (24), (25), (26), (27) ou (28)
étant de la formule (8), où L1 et L2 peuvent être identiques ou différents, et au moins un des substituants R, R', R" comprend un système π dans une relation conjuguée avec le système π de la structure tridentée des formules (17) et (19) 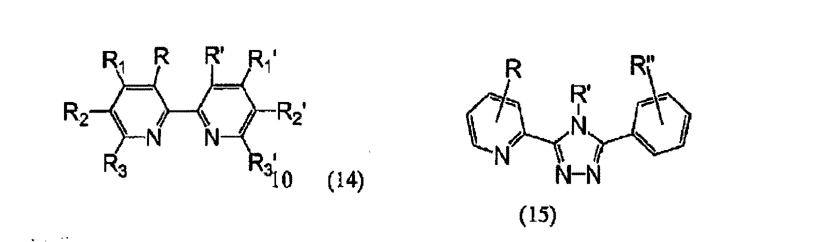 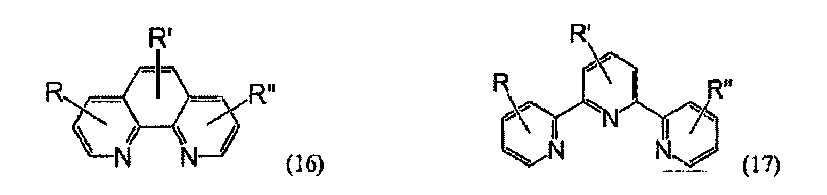 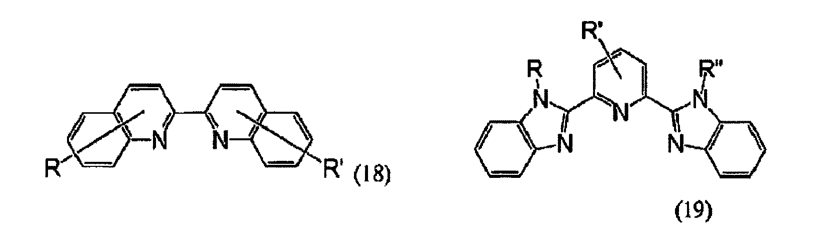 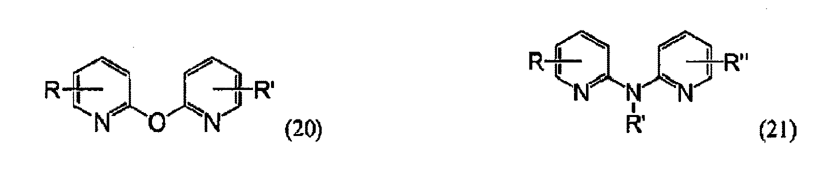 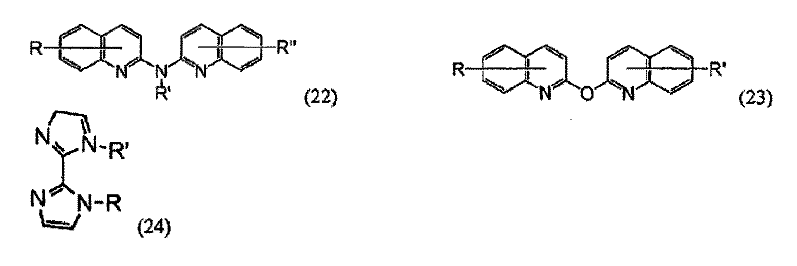 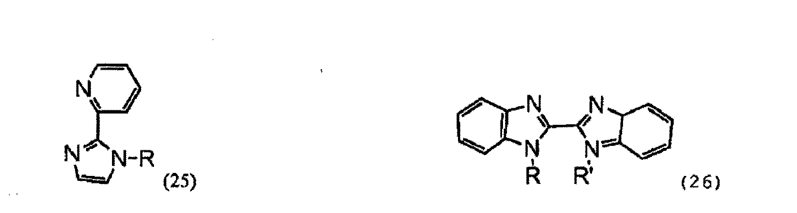 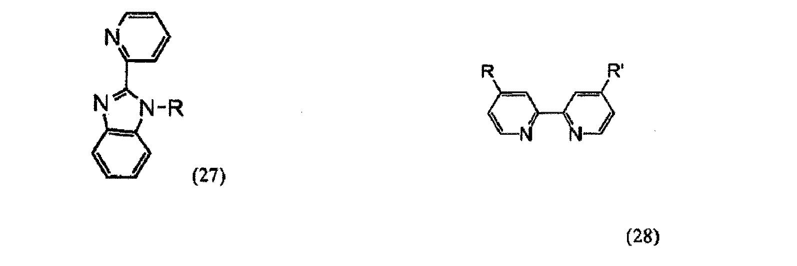 où au moins un des substituants-R, -R₁, -R₂, -R₃, -R', -R₁', -R₂', -R₃', -R" est de la formule (2), (3) ou (4) 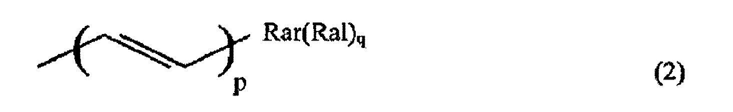 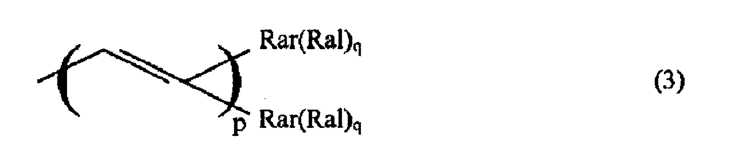 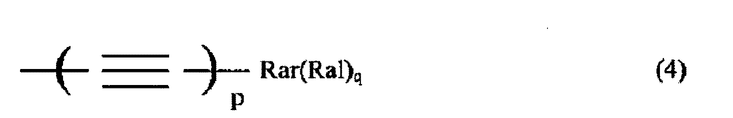 où p est un entier allant de 0 à 4,
où q est un entier allant de 0 à 4,
où Rar est un aryle monocyclique ou oligocyclique allant de C6 à C22, où -Ra1 est H, -R1, (-O-R1)ₙ, -N(R1)₂, -NHR1, 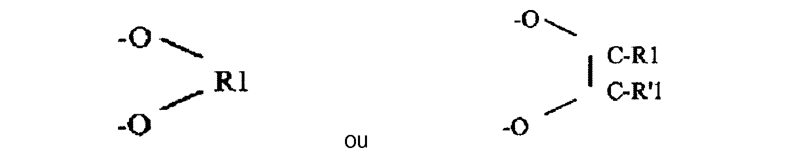 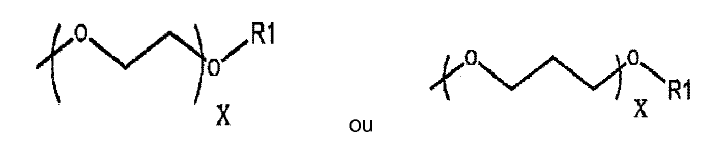 ou 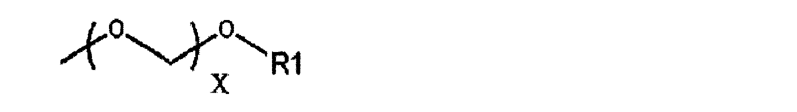 où R1, R'1 est un alkyle ayant de 4 à 10 atomes de carbone, x ≥ 0, et 0 < n < 5 et où le ou les autres du ou des substituants -R, -R₁, -R₂, -R₃, -R', -R₁', -R₂', -R₃', -R" sont des substituants identiques ou différents de la formule (1), (2) ou (3), ou sont sélectionnés parmi -H, -OH, -R₂, -OR₂ ou -N(R₂)₂, où R₂ est un alkyle ayant de 1 à 20 atomes de carbone.
